(19) Europäisches Patentamt
European Patent Office
Office européen des brevets

(11) EP 0 246 842 B1

(12) EUROPEAN PATENT SPECIFICATION

(45) Date of publication and mention of the grant of the patent:
**23.09.1998 Bulletin 1998/39**

(51) Int Cl.6: **G02F 1/133**, G02F 1/137

(21) Application number: **87304385.5**

(22) Date of filing: **18.05.1987**

(54) **A liquid crystal display device**

Flüssigkristall-Anzeigevorrichtung

Dispositif d'affichage à cristal liquide

(84) Designated Contracting States:
**DE FR GB IT**

(30) Priority: **19.05.1986 JP 114299/86**
**22.07.1986 JP 172142/86**
**22.07.1986 JP 172143/86**
**22.07.1986 JP 172144/86**
**19.12.1986 JP 303168/86**

(43) Date of publication of application:
**25.11.1987 Bulletin 1987/48**

(60) Divisional application: **97105751.8 / 0 795 773**

(73) Proprietor: **SEIKO EPSON CORPORATION**
**Shinjuku-ku Tokyo-to (JP)**

(72) Inventors:
- **Wada, Hiroshi**
  **Suwa-shi Nagano-ken (JP)**
- **Wada, Shinji**
  **Suwa-shi Nagano-ken (JP)**
- **Iijima, Chiyoaki**
  **Suwa-shi Nagano-ken (JP)**

(74) Representative: **Sturt, Clifford Mark et al**
**Miller Sturt Kenyon**
**9 John Street**
**London WC1N 2ES (GB)**

(56) References cited:
**EP-A- 107 160**
**DE-A- 3 431 871**
**FR-A- 2 564 605**
**US-A- 4 443 065**
**US-A- 4 492 433**

EP 0 246 842 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to a liquid crystal display device.

US Patent 4,443,065 discloses a double-layered twisted nematic liquid crystal display device with one layer thereof compensating for interference colouring of inoperative elements of the display area.

Japanese Laid Open Patent Specification No. 60-50511 discloses a super twisted nematic liquid crystal display device which has a twist angle of the liquid crystal molecule of more than 90°, and a pair of polarisers provided on upper and lower liquid crystal cells. An angle between the polarising axes (absorption axes) and the axis direction of the liquid crystal molecule adjacent to the electrode substrate falls within a range of 30° to 60°. Therefore, because of birefringence, when the liquid crystal display device is in the state of not applying voltage, its appearance is not white and instead its appearance is green to reddish yellow. Furthermore, when the liquid crystal device is in the state of applying voltage, its appearance is not black but instead its appearance is blue. More specifically, the known liquid crystal display device becomes green, yellowish green, yellow or reddish yellow in the positive display state and, when a selecting voltage is applied, the liquid crystal display device becomes blue or dark blue. The colour of the liquid crystal display device becomes dark blue in a negative display state and, when the selecting voltage is applied, the colour turns to yellow. These above mentioned colours are not desirable as display colours. white and black are the most suitable display colours for a liquid crystal display device.

There is a need for a liquid crystal display device having a monochrome black and white display and, in one aspect of the invention, it is an aim of the present invention to provide such a device having a monochrome black and white display in the positive and negative display states.

According to the present invention there is provided a liquid crystal display device comprising: a liquid crystal display cell including a pair of substrates with electrodes formed on their inner opposing surfaces, and a nematic liquid crystal layer disposed between said substrates and oriented at a twist angle not smaller than 120°; and first and second polarising plates between which said display cell is disposed; wherein the first polarising plate has a polarisation axis which is set in a certain angle with respect to the direction of the molecule longer axis of said display cell adjacent the substrate closest to the first polarising plate and other than the direction substantially perpendicular or substantially parallel to said direction of the said molecule longer axis, wherein the birefringence dispersion of said display cell produces wavelength dependent changes in polarisation in terms of different changes in direction of the major axes of elliptical polarisation for different wavelengths; the display device being characterised by at least one layer of a compensating optically anisotropic substance disposed between the first and second polarising plates on one side of the display cell; wherein the second polarising plate has a polarisation axis which is set in a certain angle with respect to the optical axis of said optically anisotropic substance and other than the direction substantially perpendicular or substantially parallel to said optical axis; and wherein the $\Delta$ n x d and, if the substance has a twist of optical axis, the twist angle of said compensating optically anisotropic substance is/are determined in relation to the twist angle and the $\Delta$ n x d value of said nematic liquid crystal layer of said display cell in such a manner that said compensating optically anisotropic substance produces a compensating wavelength dependent change in polarisation whereby the wavelength dependent polarisation changes within the display cell are compensated such that the major axes of elliptical polarisation for different wavelengths are brought back to substantially the same direction as each other within the device and colouring of the display is thereby substantially eliminated.

The optically anisotropic substance may be a liquid crystal which is oriented between two opposite substrates. The optically anisotropic substance may be in a polymeric film state.

If desired, the optically anisotropic substance may be twisted in a different direction from the twist direction of the nematic liquid crystal.

If more than two layers of the optically anisotropic substance are used, the directions of light axes between at least two layers are preferably different.

In order to facilitate a full and complete understanding of the invention, reference will now be made to the accompanying drawings and to the following Examples. In the accompanying drawings:

Figure 1 is a sectional view showing schematically the structure of a liquid crystal display device according to the present invention;

Figure 2 shows the relationship of each axis of a liquid crystal display device according to the present invention;

Figure 3 shows the relationship of each axis of a liquid crystal display device according to prior art;

Figure 4 shows the relationship between the external wavelength and the transmission according to a prior liquid crystal display device;

Figure 5 shows the twist angle and the region of $\Delta$n x d of the A-cell of the liquid crystal display device according to Example 1;

Figure 6 shows the relationship between the external wavelength and the transmission of the liquid crystal display device according to Example 2;

Figure 7 shows the relationship between the external wavelength and the transmission of the liquid crystal display device according to Example 3;

Figure 8 shows the relationship between the external wavelength and the transmitting state of the liquid crystal display device according to Example 4;

Figure 9 shows the relationship between the twist angle and the region of Δn x d of the liquid crystal of the A-cell of the liquid crystal display device according to Example 5;

Figure 10 shows the relationship between the external wavelength and the transmission of the liquid crystal display device according to Example 6;

Figure 11 shows the relationship between the twist angle and the region of Δn x d of the liquid crystal of the A-cell of the liquid crystal display device according to Example 9;

Figure 12 shows the relationship between the twist angle and the region ofΔn x d of the liquid crystal of the A-cell of the liquid crystal display device according to Example 10;

Figure 13 shows the relationship between the twist angle and the region of Δn x d of the liquid crystal of the A-cell of the liquid crystal display device according to Example 11;

Figure 14 shows the relationship between the twist angle and the region of Δn x d of the liquid crystal of the A-cell of the liquid crystal display device according to Example 12;

Figure 15 shows a structure, which is not an embodiment of the invention as claimed herein, employing a film state polymer layer as the optically anisotropic substance;

Figure 16 shows the relationship of each axis of a liquid crystal display device employing the A-film, which as shown is not an embodiment of the invention as claimed herein;

Figure 17 shows schematically a structure where the A-film and the polariser are in one body;

Figure 18 shows schematically the structure of another liquid crystal display device according to the present invention;

Figure 19 shows the "off state" optical characteristics of the liquid crystal display device;

Figure 20 illustrates the relationship between the liquid crystal cell, the polarised substrate, and the optically anisotropic substance in the liquid crystal display device shown in Figure 18;

Figure 21 shows a spectrum in which transmission is plotted against wavelength;

Figure 22 shows the spectrum of Figure 21 plotted on a chromaticity diagram;

Figure 23 is similar to Figure 19 and explains further conditions relating to the "off state";

Figure 24 is similar to Figure 20 and shows the condition of the structure shown in Figure 23;

Figure 25 is similar to Figure 21 and shows the spectrum of the off state;

Figure 26 is similar to Figure 22 and shows a plot on the colour co-ordinate;

Figure 27(a) illustrates dividing the liquid crystal layer into many layers;

Figure 27(b) illustrates the liquid crystal layers which are not twisted;

Figures 28 - 30 show the transition of the polarising state;

Figure 31 shows the spectrum of a commercially available polariser;

Figure 32 illustrates the driving of a liquid crystal display device of the invention;

Figure 33 shows the structure of the prior art liquid crystal display device of Japanese Laid Open Patent Specification No. 60-50511;

Figure 34 is like Figures 19 and 23 and shows schematically the off state characteristics of the above mentioned prior art super twisted nematic liquid crystal display device;

Figure 35 shows the relationship between the prior art super twisted nematic liquid crystal display device of Figure 34 and the direction of the polarising axes (absorption axes) of the polariser;

Figure 36 shows the external appearance spectrum of the liquid crystal display device when certain angular positions appertain in Figure 35; and

Figure 37 is the plot of I and II in Figure 19 on colour co-ordinates.

Referring to the drawings, Figure 1 is a sectional view showing schematically the structure of a liquid crystal display device employing a liquid crystal as the optically anisotropic substance in the liquid crystal display device of the present invention. In Figure 1, there is shown an upper polariser 1 and a liquid crystal cell 2. The liquid crystal cell 2 has a liquid crystal as an optically anisotropic substance sandwiched between two substrates, the liquid crystal cell 2 being hereinafter referred to as an A-cell. More specifically, the A-cell 2 has an upper substrate 3, a lower substrate 4, and a liquid crystal 5 which is used as the optically anisotropic substance in the A-cell. Also shown in Figure 1 is a liquid crystal cell 6 for providing a display by applying a voltage. The liquid crystal cell 6 is hereinafter referred to as a B-cell. The B-cell comprises an upper electrode substrate 7, a lower electrode substrate 8 and a liquid crystal 9. A shown in Figure 1, the liquid crystal display device includes a lower polariser 10.

Referring now to Figure 2, there is shown the relationship of each axis of the liquid crystal display device according to the present invention. In Figure 2, there is shown a rubbing direction 11 of the lower electrode substrate 8 of the B-cell, a rubbing direction 12 of the upper electrode substrate 7 of the B-cell, a rubbing direction 13 of the lower substrate 4 of the A-cell, a rubbing direction 14 of the upper substrate 3 of the A-cell, a direction 15 of the polarising axes (absorption axes) of the lower polariser 10, a direction 16 of the polarising axes (absorption axes) of the upper polariser 1, an angle 17 between the direction 16 of the polarising axes (absorption axes) of the upper polariser 1 and the rubbing direction 14 of the upper substrate 3 of the A-cell, a twist angle 18 of the liquid crystal 5 within the A-cell, an angle 19 between the rubbing direction 13 of the lower substrate 4 of the A-cell and the rubbing direction 12 of the upper electrode 7 substrate of the B-cell, a twist angle 20 of the liquid crystal 9 within the B-cell, and an angle 21 between the rubbing direction 11 of the lower electrode substrate 8 of the B-cell and the direction 15 of the polarising axes ((absorption axes) of the lower polariser 10.

The twist direction of the liquid crystal molecule within each cell is hereinafter shown with the twist direction extending towards the bottom from the top of the cell. Also, when the selecting or the non-selecting voltage is applied by 1/100 duty driving, it is defined that the state which has substantial optical transmitting power is the "OFF" state, and the state which has little optical transmitting power is the "ON" state.

In the liquid crystal display according to the present invention, the twist angle of the liquid crystal 9 of the B-cell has no limit in size. The practical embodiments of the liquid crystal display device according to the present invention is as follows.

As the liquid crystal which is employed in the A-cell and the B-cell, there can be used phenyl cyclohexane, biphenyl cyclohexane species mixing nematic liquid crystal and

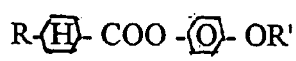

species mixing liquid crystal whose dielectric anisotropy $\Delta\varepsilon < O$. The same liquid crystal can be used for either the A-cell or the B-cell. Further, the same effect can be obtained even from the using of a different liquid crystal in the A-cell and the B-cell. In order to obtain the twist of the liquid crystal molecules in the A-cell and the B-cell, CB-15 (a product of BDH Company) or S-811 (a product of Merk Company) may be used as an optical activator.

In the liquid crystal display device according to the present invention, when the linearly polarised light which passes through one of the pair of polarisers, passes through the liquid crystal cell, there results elliptically polarised light whose oblateness does not coincide with the direction of the long axis due to the wavelength. Then, the elliptically polarised light is passed through the optically anisotropic substance. The light which passes through the optically anisotropic substance has a large oblateness in the range from about 400 nm to about 700 nm. Further, the light becomes elliptically polarised light whose direction in the long axis is almost uniform. Light which passes through the other polariser has a small difference of transmission due to the wavelength, and the light becomes white in colour. Even at the time when the selecting voltage is applied, when the linearly polarised light which passes through ones of the pair of polarisers, passes through the liquid crystal cell, elliptically polarised light is produced whose oblateness does not coincide with the direction of the long axis due to the wavelength. Then, when the light passes through the optically anisotropic substance, there can be obtained the elliptically polarised substance whose oblateness is large, and whose direction in the long axis is almost uniform. At this time, since the direction of the long axis of the elliptically polarised light is twisted at the angle of about 90° with respect to the direction of the long axis of the elliptically polarised light at the time when the voltage is not applied, the direction of the polarising axis of the polariser is determined at the suitable value, thereby enabling the liquid crystal display device to give a monochrome display.

The state (the oblateness, the direction of long axis) of the polarised light which is emitted from the optically anisotropic substance will now be described.

Firstly, when two linearly polarised lights which vibrate in a direction perpendicular to each other are synthesised, elliptically polarised light which vibrates on the ellipse can be obtained. The elliptically polarised light can be obtained by the following formulas.

$$X = A \sin wt + B \cos wt \qquad (1)$$

$$Y = C \sin wt + D \cos wt \qquad (2)$$

(w is a circular frequency)

Secondly, the elliptically polarised light which passes through the uniaxial optically anisotropic substance (the birefringence is represented as $\Delta n = n_{//} - n_{\perp}$ and the layer thickness is represented as d) can be obtained by the following formulas.

$$Xm = A \sin (wt + 2\pi n_{//} d/\lambda) + B \cos (wt + 2\pi n_{//} d/\lambda) \quad (3)$$

$$Ym = C \sin (wt + 2\pi n_{\perp} d/\lambda) + D \cos (wt + 2\pi n_{\perp} d/\lambda) \quad (4)$$

($\lambda$ is a wavelength of the light)

In the case of the twist orientated liquid crystal layer, the state of the polarised light at the time of passing through each layer is calculated successively by laminating a uniaxial optically anisotropic substance (it is defined that the birefringence is $\Delta n = n_{//} - n_{\perp}$ and the layer thickness is d) represented as the above formulas (3) and (4) at the rotating angle (the amount thereof becomes the twist angle of the liquid crystal layer). Thus, the state at the time of passing through the liquid crystal layer is found.

The state of vibration at the number of (m+1)th can be found by the following formulas.

$$X_{m+1} = Xm \cos \theta + Ym \sin \theta \quad (5)$$

$$Y_{m+1} = - Xm \sin \theta + Ym \cos \theta \quad (6)$$

The state of the elliptically polarised light which passes through the optically anisotropic substance comprising the liquid crystal layer or the like can be found by the method of substituting the formulas (3) and (4) to Xm and Ym in the formulas (5) and (6). In the present invention, the state of the elliptically polarised light is calculated at the intervals of the wavelength of each light. Then the state of the light which is emitted, is shown in the spectrum. The elliptical shape of the light and the long axis direction may also be determined. Since the spectrum has little difference in the transmission amount between each wavelength, the emitted light becomes close to the required white colour.

As a result of the above, Figures 5, 9, and 11 to 14 show the best suitable conditions. These figures show the desirable range of the twist angle and Δ n x d of the optically anistropic substance using the liquid crystal at the time of determining the twist angle and Δ n x d of the liquid crystal cell performing the display.

**Example 1**

In Figure 2, it is defined that the twist angle 20 of the liquid crystal of the B-cell is about 200° to the left direction, Δ n x d is about 0.9 μm, the angle 19 is about 90°, the angle 17 is 30° to 60°, and the angle 21 is from 30° to 60°. When the twist angle 18 and Δ n x d of the liquid crystal of the A-cell are defined as the region which is marked with the oblique lines as shown in Figure 5, a liquid crystal display device can be obtained wherein it becomes white in colour in the "OFF" state but becomes black in colour in the "ON" state.

**EXAMPLE 2**

In Example 1, it is defined that the angle 17 of Figure 2 is about 40°, the twist angle 18 of the liquid crystal molecule is about 140° to the right direction, the angle 19 is about 90°, the twist angle 20 of the liquid crystal molecule is about 200° to the left direction, the angle 21 is about 40°, Δ n x d of the liquid crystal layer of the A-cell is about 0.7 μm, and Δ n x d of the liquid crystal layer of the B-cell is about 0.9 μm. Figure 6 shows the external spectrum of the liquid crystal display device thereupon. In Figure 6, the curve I shows the "OFF" state, and the curve II shows the "ON" state. According to prior art as shown in Figure 4, the external spectrum of the liquid crystal display device becomes yellow in colour in the "OFF" state (curve I), whilst the same becomes blue in colour in the "ON" state (curve II). However, as shown in Figure 6, in the liquid crystal display device according to the present invention, the external spectrum of the liquid crystal display device becomes white in colour in the "OFF" state, whilst the same becomes black in colour in the "ON" state.

**EXAMPLE 3**

In Example 1, it is defined that the angle 17 of Figure 2 is about 40°, the twist angle 18 of the liquid crystal molecule is about 200° to the right direction, the angle 19 is about 90°, the twist angle 20 of the liquid crystal molecule is about 200° to the left direction, the angle 21 is about 50°, Δ n x d of the liquid crystal layer of the A-cell is about 0.9 μm, and Δ n x d of the liquid crystal layer of the B-cell is about 0.9 μm. Figure 7 shows the external spectrum of the liquid crystal

display device thereupon. In Figure 7, the curve I shows the "OFF" state, whilst the curve II shows "ON" state. In this case, as in Example 2, the external spectrum of the liquid crystal display device becomes white in colour in the "OFF" state, whilst the same becomes black in colour in the "ON" state.

**EXAMPLE 4**

In Example 1, it is defined that the angle 17 of Figure 2 is about 40°, the twist angle 18 of the liquid crystal molecule is about 260° to the right direction, the angle 19 is about 90°, the twist angle 20 of the liquid crystal molecule is about 200° to the left direction, the angle 21 is about 40°, Δ n x d of the liquid crystal layer of the A-cell is about 0.8 μm, and Δ n x d of the liquid crystal layer of the B-cell is about 0.9 μm. Figure 8 shows the external spectrum of the liquid crystal display device thereupon. In Figure 8, the curve I shows the "OFF" state, whilst the curve II shows the "ON" state. In this case, as in Examples 2 and 3, the external spectrum of the liquid crystal display device becomes white in colour in the "OFF" state, whilst the same becomes black in colour in the "ON" state.

**EXAMPLE 5**

In Figure 2, it is defined that the twist angle of the liquid crystal of the B-cell 20 is about 250° to the left direction, Δ n x d is about 0.9 μm. the angle 19 is about 90°, the angle 17 is between 30° and 60°, and the angle 21 is between 30° and 60°. When the twist angle 18 and Δ n x d of the liquid crystal of the A-cell are defined as the region which is marked with the oblique lines as shown in Figure 9, a liquid crystal display device can be obtained wherein the external spectrum of the liquid crystal display device becomes white in colour in the "OFF" state, whilst the same becomes black in colour in the "ON" state.

**EXAMPLE 6**

In Example 5, it is defined that the angle 17 of Figure 2 is about 40°, the twist angle 18 of the liquid crystal molecule is about 160° to the right direction, the angle 19 is about 90°, the twist angle 20 of the liquid crystal molecule is about 250° to the left direction, the angle 21 is about 40°, Δ n x d of the liquid crystal layer of the A-cell is about 0.8 μm, and Δ n x d of the liquid crystal layer of the B-cell is about 0.9 μm. Figure 10 shows the external spectrum of the liquid crystal display device thereupon. In Figure 10, the curve I shows the "OFF" state, and the curve II shows the "ON" state. In this case, as in Example 2, the external spectrum of the liquid crystal display device becomes white in colour in the "OFF" state, whilst the same becomes black in colour in the "ON" state.

**EXAMPLE 7**

In Figure 2, it is defined that the angle 17 is about 40°, the twist angle 18 of the liquid crystal molecule is about 360° to the right direction, the angle 19 is about 90°, the twist angle 20 of the liquid crystal molecule is about 250° to the left direction, and the angle 21 is about 40°. Further, Δ n x d of the liquid crystal layer of the A-cell is about 1.0 μm, and Δ n x d of the liquid crystal layer of the B-cell is about 0.9 μm. In this case, the external spectrum of the liquid crystal display device becomes white in colour in the "OFF" state, whilst the same becomes black in colour in the "ON" state.

**EXAMPLE 8**

In Figure 2, it is defined that the angle 17 is about 50°, the twist angle 18 of the liquid crystal molecule is about 170° to the right direction, the angle 19 is about 90°, the twist angle 20 of the liquid crystal is about 170° to the left direction, and the angle 21 is about 40°. Further, Δ n x d of the liquid crystal layer of the A-cell is about 0.7 μm, and Δ n x d of the liquid crystal layer of the B-cell is about 0.7 μm. In this case, there can be obtained a liquid crystal display device having a high response speed, wherein the external spectrum of the liquid crystal display device becomes white in colour in the "OFF" state, whilst the same becomes black in colour in the "ON" state.

**EXAMPLE 9**

In figure 2, it is defined that the twist angle 20 of the liquid crystal of the B-cell is about 120° to the left direction, Δ n x d is about 0.9 μm, the angle 19 is about 90°, the angle 17 is between 30° and 60°, and the angle 21 is between 30° and 60°. When the twist angle 18 and the Δ n x d of the liquid crystal of the A-cell are defined as the region which is marked with the oblique lines as shown in Figure 11, a liquid crystal display device can be obtained wherein the external spectrum of the liquid crystal display device becomes white in colour in the "OFF" state, whilst the same

becomes black in colour in the "ON" state.

**EXAMPLE 10**

In Figure 2, it is defined that the twist angle 20 of the liquid crystal of the B-cell is about 200° to the left direction, Δ n x d is about 0.6 μm, the angle 19 is about 90°, the angle 17 is between 30° and 60°, and the angle 21 is between 30° and 60°. When the twist angle 18 and Δ n x d of the liquid crystal of the A-cell are defined as the region which is marked with the oblique lines as shown in Figure 12, a liquid crystal display device can be obtained wherein the external spectrum of the liquid crystal display device becomes white in colour in the "OFF" state, whilst the same becomes black in colour in the "ON" state.

**EXAMPLE 11**

In figure 2, it is defined that the twist angle 20 of the liquid crystal of the B-cell is about 200° to the left direction, Δ n x d is about 1.5 μm, the angle 19 is about 90°, the angle 17 is between 30° and 60°, and the angle 21 is between 30° and 60°. When the twist angle 18 and Δ n x d of the liquid crystal of the A-cell are defined as the region which is marked with the oblique lines as shown in Figure 13, a liquid crystal display device can be obtained wherein the external spectrum of the liquid crystal display device becomes white in colour in the "OFF" state, whilst the same becomes black in colour in the "ON" state.

**EXAMPLE 12**

In Figure 2, it is defined that the twist angle 20 of the liquid crystal of the B-cell is about 350° to the left direction, Δ n x d is about 0.9 μm, the angle 19 is about 90°, the angle 17 is between 30° and 60°, and the angle 21 is between 30° and 60°. When the twist angle 18 and Δ n x d of the liquid crystal of the A-cell are defined as the region which is marked with the oblique lines as shown in Figure 14, a liquid crystal display device can be obtained wherein the external spectrum of the liquid crystal display device becomes white in colour in the "OFF" state, whilst the same becomes black in colour in the "ON" state.

**EXAMPLE 13**

In Examples 1 to 12, the same effect can be obtained by a method in which the lower substrate 4 of the A-cell and the upper electrode substrate 7 of the B-cell as shown in Figure 1 are replaced by one substrate.

**EXAMPLE 14**

In Examples 1 to 13, it is defined that the temperature at the point of nematicisotropic (NI) of the liquid crystal of the A-cell is $T_A$ (k), and the temperature at the point of NI of the liquid crystal of the B-cell is $T_B$ (k). A liquid crystal is employed whose relationship between $T_A$ and $T_B$ is satisfied by the condition $0.86 \leq T_A/T_B \leq 1.15$. As a result, although Δn x d of the liquid crystal layer of the B-cell and the A-cell is changed by the temperature change, there is no change in the external colour of the liquid crystal display device.

**EXAMPLE 15**

In Examples 1 to 14, a liquid crystal whose dielectric anisotropy $\Delta\varepsilon$ is positive is employed as the liquid crystal of the A-cell. Thus the orientation of the liquid crystal molecules of the A-cell gets confused by the static electricity from the outside, thereby causing an uneven colour in the external appearance of the liquid crystal display device. Therefore, a liquid crystal whose dielectric anisotropy $\Delta\varepsilon$ is negative is employed as the liquid crystal of the A-cell. There results an improved liquid crystal display device which does not have the uneven colour even in the presence of static electricity from the outside.

**EXAMPLE 16**

In Examples 1 to 14, electrodes are attached to the inside of the upper and lower substrates of the A-cell, and a liquid crystal whose dielectric anisotropy is positive is employed as the liquid crystal of the A-cell. Thereby, although the colour in the external appearance of the liquid crystal display device changes by the temperature change, it is possible to overcome the colour change by applying a voltage between electrodes which are attached to the upper and lower substrate of the A-cell.

**EXAMPLE 17**

In Examples 1 to 16, except for Example 13, the A-cell is optically adhered with the B-cell in order to prevent reflection of light on the surface of the substrate adjacent to the A-cell and the B-cell. Polyvinyl butyral film which is embossed is utilised as an adhesive layer, and adhesion is achieved by the application of heat or pressure. A heat-cured epoxy or uletan adhesive can be also utilised. Further, acrylic ultraviolet adhesive can be utilised. Thus the A-cell is adhered to the B-cell such as to reduce the light reflection on the boundary surface of both cells.

**EXAMPLE 18 (not an embodiment of the invention claimed herein)**

Figure 15 shows a structure employing a film state polymer layer (hereinafter referred to as A-film) as the optically anisotropic substance. In Figure 15, there is shown an upper polariser 36, an upper A-film 37, a B- cell 38, a lower A-film 39, and a lower polariser 40. Figure 15 also shows an upper electrode substrate 41 of the B-cell, a liquid crystal 42 of the B-cell, and a lower electrode substrate 43 of the B-cell. Figure 16 shows the relationship of each axis of a liquid crystal display device employing the A-film. In Figure 16, there is shown a rubbing direction 45 of the upper electrode substrate of the B-cell, a rubbing direction 46 of the lower electrode substrate of the B-cell, a direction 47 of the optical axis of the upper A-film, a direction 48 of the optical axis of the lower A-film, a direction 49 of the polarising axes (absorption axes) of the upper polariser 36, a direction 50 of the polarising axes (absorption axes) of the lower polariser 40, an angle 51 between the direction 49 of the polarising axes (absorption axes) of the upper polariser and the direction 47 of the optical axis of the upper A-film, an angle 52 between the direction 47 of the optical axes of the upper A-film and the rubbing direction 45 of the upper electrode substrate of B-cell, a twist angle 53 of the liquid crystal molecule of the B-cell, an angle 54 between the rubbing direction 46 of the lower electrode substrate of B-cell and the direction 48 of the optical axis of the lower A-film, an angle 55 between the direction 48 of the optical axis of the lower A-film and the direction 50 of the polarising axes (absorption axes) of the lower polariser 40. In Figure 15, it is defined that the angle 51 is about 40°, the angle 52 is about 90°, the twist angle 53 if about 200° to the left direction, and the angle between the rubbing direction 46 of the lower electrode substrate of the B-cell 38 and the direction 50 of the polarising axes (absorption axes) of the lower polariser 40 without the lower A-film 39 is about 40°. The product of the birefringence $\Delta$ n f and the thickness of the upper A-film $\vartheta$ d f, $\Delta$ n f x d f, is about 0.55 μm.

n x d of the liquid crystal layer of the B-cell is about 0.9 μm. In this case, the liquid crystal display device becomes white in colour in the "OFF" state, whilst the same becomes black in colour in the "ON" state.

The A-film may be a stretched film such for example as diacetyl cellulose, polyethylene terephthalate, cellulose diacetate, polyvinyl alcohol, polyamide, polyether sulfone, acryl, polysulfone, polyimide and polyolefin.

**EXAMPLE 19 (not an embodiment of the invention claimed herein)**

In Figure 16, it is defined that the angle 51 is about 50°, the angle 52 is about 90°, the twist angle 53 of the liquid crystal molecule of the B-cell is about 200° to the left direction, the angle 54 is about 90°, the angle 55 is about 50°. Δn x d which is Δn x d of the upper A-film added to Δn x d of the lower A-film, is about 0.6 μm, whilst Δn x d of the liquid crystal layer of the B-cell is about 0.9μm. In this case, the same effect as that in Example 18 can be obtained.

**EXAMPLE 20**

Referring to Figures 15 and 16, the structure without the lower A-film is defined. It is defined that Δn x d of the upper A-film is about 0.65 μm, the angle 51 is about 50°, the angle 52 is about 90°, the twist angle 53 of the liquid crystal molecule of the B-cell is about 250° to the left direction, the angle between the rubbing direction 46 of the lower electrode substrate of B-cell and the direction 50 of the polarising axes (absorption axes) of the lower polarisers is about 50°, and Δn x d of the liquid crystal of the B-cell is about 0.9μm. In this case, the liquid crystal display device becomes white in colour in the "OFF" state, whilst the same becomes black in colour in the "ON" state.

**EXAMPLE 21**

In Figures 15 and 16, the structure without the lower A-film is defined. The upper A-film is composed with eleven films whose optical axes are twisted to the right direction through 15° from top to bottom. The total amount of Δn x d of the eleven films is about 0.7μm. Further, an angle between the polarising (absorption axes) of the upper polariser and the direction of the optical axis of the uppermost film of the upper A-film is represented as about 50°, an angle between the direction of the optical axis of the lower film of the upper A-film and the rubbing direction of the upper electrode substrate of the B-cell is represented as about 90°, and an angle between the rubbing direction of the lower electrode substrate of the B-cell and the polarising axes (absorption axes) of the lower polariser is represented as

about 40°. The twist angle 53 of the liquid crystal molecule of the B-cell is about 200° to the left direction, and the Δ n x d of the liquid crystal of the B-cell is about 0.9 μm. In this case, the liquid crystal device becomes white in colour in the "OFF" state, whilst the same becomes black in colour in the "ON" state.

**EXAMPLE 22**

In Figures 15 and 16, the structure without the lower A-film 39 is defined. It is defined that Δ n x d of the upper A-film 37 is about 0.65 μm to 0.85 μm, the angle 51 is about 35° to 55°, the angle 52 is about 80° to 100°, the twist angle 53 of the liquid crystal molecule of the B-cell is about 200° to the left direction, an angle between the rubbing direction 46 of the lower electrode substrate of the B-cell and the direction 50 of the polarising axes (absorption axes) of the lower polariser is about 35° to 55°, and Δ n x d of the liquid crystal of the B-cell is about 0.9 μm. In this case, the liquid crystal display device becomes white in colour in the "OFF" state, whilst the same becomes black in colour in the "ON" state.

**EXAMPLE 23**

In Figures 15 and 16, the structure without the lower A-film 39 is defined. It is defined that Δ n x d of the upper A-film 37 is about 0.25 μm to 0.45 μm, the angle 51 is about 35° to 55°, the angle 52 is about 80° to 100°, the twist angle of the liquid crystal molecule of the B-cell is about 200° to the left direction, an angle between the rubbing direction 46 of the lower electrode substrate of the B-cell and the direction 50 of the polarising axes (absorption axes) is about 35° to 55°, and Δ n x d of the liquid crystal of the B-cell is about 0.9 μm. In this case, the liquid crystal display device becomes white in colour in the "OFF" state, whilst the same becomes black in colour in the "ON" state.

**EXAMPLE 24**

In Figures 15 and 16, the structure without the lower A-film 39 is defined. It is defined that Δ n x d of the upper A-film 37 is about 0.4 μm to 0.6 μm, the angle 51 is about 35° to 55°, the angle 52 is about 80° to 100°, the twist angle 53 of the liquid crystal molecule of the B-cell is about 180° to the left direction, the angle between the rubbing direction 46 of the lower electrode substrate of the B-cell and the direction 50 of the polarising axes (absorption axes) of the lower polariser is about 35° to 55°, and Δ n x d of the liquid crystal of the B-cell is about 0.9 μm. In this case, the liquid crystal display device becomes white in colour in the "OFF" state, whilst the same becomes black in colour in the "ON" state.

**EXAMPLE 25**

In Figures 15 and 16, the structure without the lower A-film 39 is defined. It is defined that Δ n x d of the upper A-film 37 is about 0.5 to 0.7 μm. the angle 51 is about 35° to 55°, the angle is about 80° to 100°, the twist angle 53 of the liquid crystal molecule of the B-cell is about 180° to the left direction, the angle between the rubbing direction 46 of the lower electrode substrate of the B-cell and the direction 50 of the polarising axes (absorption axes) is about 35° to 55°, and Δ n x d of the liquid crystal of the B-cell is about 1.0. In this case, the liquid crystal display device becomes almost white in colour in the "OFF" state, whilst the same becomes almost black in colour in the "ON" state.

**EXAMPLE 26**

In Figures 15 and 16, the structure without the lower A-film 39 is defined. It is defined that Δ n x d of the upper A-film 37 is about 0.5 to 0.6 μm, the angle 51 is about 35° to 55°, the angle 52 is about 80° to 100°, the twist angle 53 of the liquid crystal molecule of the B-cell is about 230° to the left direction, the angle between the rubbing direction 46 of the lower electrode substrate of the B-cell and the direction 50 of the polarising axes (absorption axes) of the lower polariser is about 35° to 55°, and Δ n x d of the liquid crystal of the B-cell is about 0.9 μm. In this case, the liquid crystal display device becomes almost white in colour in the "OFF" state, whilst the same becomes almost black in the "ON" state.

**EXAMPLE 27**

In Examples 20 to 26, a structure is defined which is formed by the A-film and the polariser being in one body. Figure 17 shows schematically a structure where the A-film and the polariser are in one body. In Figure 17, there is shown a protective film 56 of the polariser, a polariser 57, an A-film 58 and a protective film 59 of the polariser. As shown in Figure 17, the A-film which is incorporated with the polariser, is utilised in the liquid crystal display device,

thereby to obtain the same effect.

**EXAMPLE 28**

In Examples 1 to 17 and 20 to 27, even although a reflector is provided in the outside of either the upper or the lower polariser, a reflective display device giving monochrome display can be obtained.

It will be appreciated from the above description with reference to the drawings and the Examples that the present invention provides an excellent liquid crystal display device giving monochrome display, wherein the liquid crystal display device becomes white in colour in the "OFF" state, and black in colour in the "ON" state.

Figure 3 shows the relationship of each axis of the liquid crystal display device according to prior art and the direction of the polarising axes (absorption axes) of the polariser. In Figure 3, there is shown a rubbing direction 100 of the upper electrode substrate of the liquid crystal cell, a rubbing direction 101 of the lower electrode substrate of the liquid crystal cell, a direction 102 of the polarising axes (absorption axes) of the upper polariser, a direction 103 of the polarising axes (absorption axes) of the lower polariser, a twist angle 104 of the liquid crystal molecule of the liquid crystal cell, an angle 105 between the polarising axes (absorption axes) of the upper polariser and the rubbing direction 100 of the upper electrode substrate of the liquid crystal cell, and an angle 106 between the rubbing direction 101 of the lower electrode substrate and the polarising axes (absorption axes) of the lower polariser.

Figure 4 shows the external appearance of the spectrum of the liquid crystal display device in the case where the twist angle 104 is about 200°, the angle 105 is about 50°, the angle 106 is about 50°, and $\Delta$ n x d of the liquid crystal is about 0.9 µm in Figure 3. In Figure 4, the curve I is a state of applying the voltage, and the curve II is a spectrum at the time when the selecting voltage is applied by the 1/100 duty driving.

Before referring to Figures 18 to 37, reference will again be made to the super twisted nematic liquid crystal display device as disclosed in Japanese Laid Open Patent Specification No. 60-50511. This known super twisted nematic liquid crystal display device has, as mentioned above, a twist angle of the liquid crystal molecule of more than 90° and a pair of polarisers provided on the upper and lower liquid crystal cells. Also as mentioned above, an angle between the polarising axes (absorption axes) and the axis direction of the liquid crystal molecule adjacent to the electrode substrate thus falls within a range of between 30° and 60° and because of birefringence, when the liquid crystal display device is in the state of not applying voltage, its appearance is not white and instead its appearance becomes green to reddish yellow. Also, when the liquid crystal device is in the state of applying voltage, its appearance is not black but instead is appearance becomes blue.

Figure 32 shows an example for driving the liquid crystal display device according to the present invention.

Figure 33 is a schematic view of the prior art super twisted nematic liquid crystal display device of Japanese Laid Open Patent Specification No. 60-50511. In Figure 33, 171 is an upper polariser, 172 is a liquid crystal cell, 173 is a substrate, 174 is a transparent electrode, 175 is an orientation film, 176 is a spacer, 177 is a liquid crystal, and 178 is a lower polariser.

Referring now to Figure 35, there is shown the relationship between the liquid crystal cell of the prior liquid crystal display device and the direction of the polarising axes (absorption axes) of the polariser. In Figure 35, 190 is a rubbing direction of the upper electrode substrate of the liquid crystal cell, 191 is a rubbing direction of the lower electrode substrate of the liquid crystal cell, 192 is a direction of the polarising axes (absorption axes) of the upper polariser, 193 is a direction of the polarising axes (absorption axes) of the lower polariser, 194 is a size of the twist angle of the liquid crystal molecule of the liquid crystal cell, 195 is an angle which is formed by the rubbing direction 190 of the upper electrode substrate and the direction 192 of the polarising axes (absorption axes) of the upper polariser and 106 is an angle which is formed by the rubbing direction 191 of the lower electrode substrate and the direction 193 of the polarising axes (absorption axes) of the lower polariser.

Figure 36 shows the external appearance spectrum of the liquid crystal display device in the case where the angle 194 is about 200°, the angle 195 is about 50°, the angle 196 is about 50°, and the further $\Delta$ n x d of the liquid crystal is about 0.9 µm in Figure 33. In Figure 36, the curve I shows the spectrum of the off state pixel transmission and II shows the spectrum of on state pixel transmission. Each pixel is driven by conventional X-Y matrix multiplex driving. The duty ratio of the multiplex driving is, in this case, 1/100. The "off state" is defined as the state of no voltage application or, even under the voltage application, the state where little orientation change in the liquid crystal layer takes place. The "on state" is defined as the state where voltages, enough to cause orientation and optical transmission change, are applied. It will be noticed from Figure 38 that I is "bright" and II is "dark". Thus, I and II can visually be distinguished.

Figure 37 is the plot of I and II in Figure 36 on the colour co-ordinates (CIE 1931, i.e. Commission Internationale de Enluminure by which a trichromatic specification was decided in 1931). Figure 37 shows that the off state I is yellow and the on state II is blue.

As mentioned above, according to the prior art super twisted nematic liquid crystal display device of Japanese Laid Open Patent Specification No. 60-50511, the colour of the external appearance of the liquid crystal display device becomes green, yellowish green, yellow or reddish yellow in the positive display, and at the time when the selecting

voltage is applied, the colour becomes blue or dark blue. The colour of the liquid crystal display device becomes dark blue in the negative display state and, when the selecting voltage is applied, the colour becomes yellow. As previously stated, these colours are not desirable colours as the display colour of the display device. More specifically, white and black are the most suitable display colours for the display device.

In addition to the requirement for a liquid crystal display device having a "black and white" display, when it is desired to make a colour display, especially a full colour display, in combination with a colour filter, it is very important for display performance as to whether the displaying mode is "black and white" or not. In the case of the above mentioned prior super twisted nematic liquid crystal display device, the spectrum of which is shown in Figure 36, it is difficult to display red and blue as bright as green. In one aspect of this invention, the present invention aims to deal with this problem. Thus, more specifically, this invention aims in the said one aspect to provide the improved liquid crystal display device having the function of the black and white display both in the positive mode or negative mode, and also to enable the provision of a colour display having a good colour performance.

Figure 18 is given as a typical example of a display that has the required black and white display and the required colour display. In Figure 18, there are shown linear polarisers 411, 418, a liquid crystal cell 412 and an optically anisotropic substance 419. Also shown in Figure 18 is a substrate 413, a transparent electrode 414, an orientation film 415, a spacer 416 and a liquid crystal 417. The spacer 416 is for providing a desired space between substrates. The polarisers, liquid crystal materials, way of giving orientation to the liquid crystal layer, way of driving etc. used in Figure 18 are the same as the prior super twisted nematic liquid crystal display device of Japanese Laid Open patent specification no. 60-50511 and prior twisted nematic liquid crystal display devices.

Figure 31 is the spectrum of a commercially available polariser which is called LLC2-82-18 and which is manufactured by Sanritsu Electronics Co., Japan. This is an example of a polariser. In Figure 31, I represents a parallel state and II represents a cross nicol state.

The liquid crystal material used in the present invention may be a nematic liquid crystal which has a positive dielectric anisotropy. One example of such a material is the material which is known as SS-4008 and which is manufactured by Chisso Co. Another example of such a material is shown below:

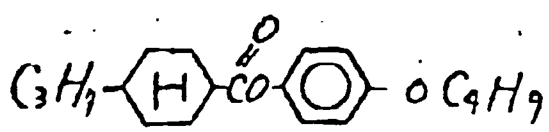 18 %

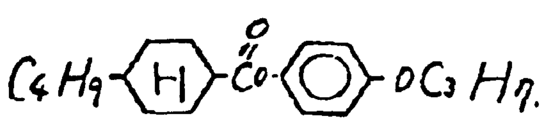 18 %

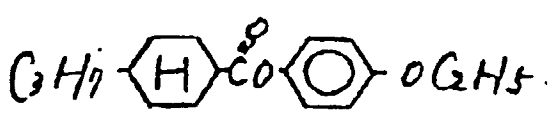 18 %

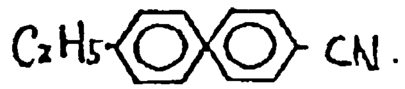 14 %

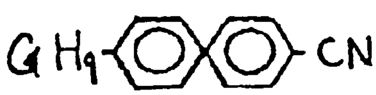 16 %

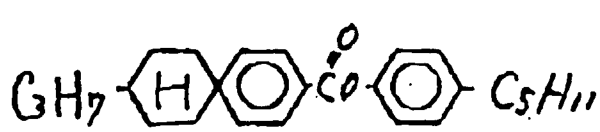 6 %.

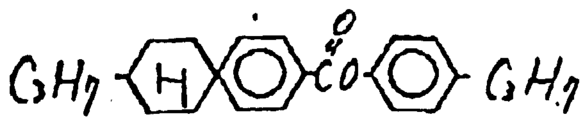 5 %

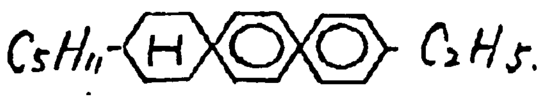 5 %

In order to keep the twisted structure stable, it is desirable to dope chiral compounds in the liquid crystal mixture. Preferred examples of such compounds are CB-15 (manufactured by British Drug Houses) for right handed helix, and S-811 (manufactured by Merck) for left handed helix.

Referring again to Figure 18, the optically anisotropic substance 419 is the key component. Liquid crystal compounds, uniaxially expanded polymer film, polymer liquid crystal film, and liquid crystal compounds in the polymer matrix are usable as the optically anisotropic substance. These examples usually show uniaxial optical anisotropy. Substances that show biaxial optical anisotropy can be used in some cases.

Nematic liquid crystal, cholesteric liquid crystal and smectic liquid crystal can be used for the optically anisotropic substance. Preferably, the same nematic liquid crystal compound is employed for liquid crystal cell 412 in Figure 18. This is because the mismatching of birefringence dispersion between the liquid crystal layer and the optically anisotropic substance layer can be overcome.

Examples of uniaxially expanded polymer film are polyvinyl alcohol, polyester, polyethylene, polyetheramide and polysulfone. An example of polymer liquid crystal film is the polymer blend of polypeptide and polymethacrylate. Other polymer liquid crystals than polypeptide can be used. Polymer liquid crystals that show a cholesteric phase are preferable. One such example is as given as follows:

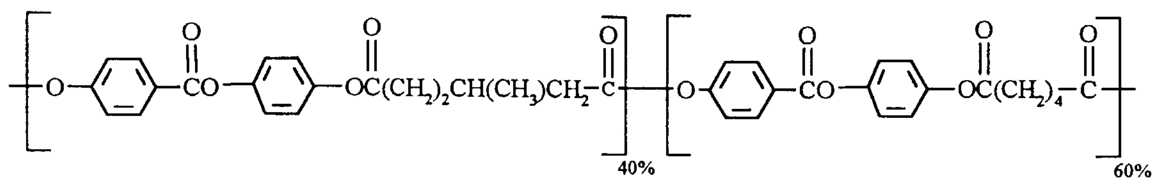

Examples of liquid crystal compounds in the polymer matrix are composed by the following components. Examples of liquid crystal compounds are a blend of phenyl cyclohexane, cyclohexyl cyclohexane, biphenyl components and chiral components. Examples of polymer matrix materials are polymethylmethacrylate, polyaceticvinyl and polyamide. A preferred example of a liquid crystal compound in the polymer matrix is as follows:

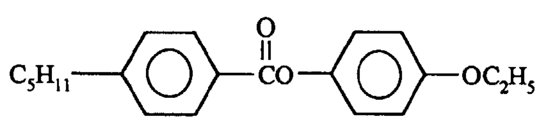 17%

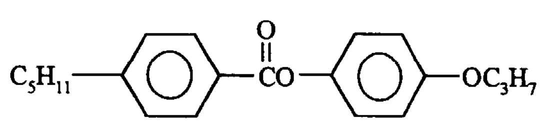 17%

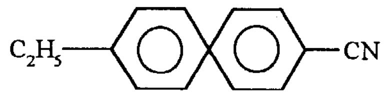

16%

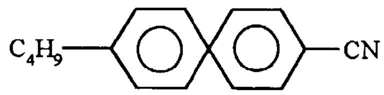

16%

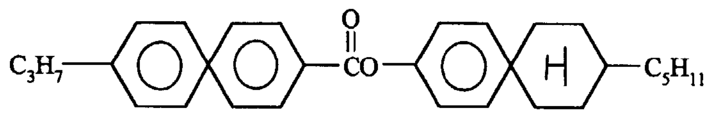

30%

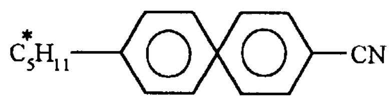

4%

It will be appreciated that, in order to be free of a colouring state, the present invention employs a display having at least one layer of an optically anisotropic substance. There will now be given a detailed explanation of the function of the layer of optically anisotropic substance.

Figure 34 is a schematic drawing to explain the "off state" optical characteristics of the prior super twisted liquid crystal display device disclosed in Japanese Laid Open Patent Specification No.60-5051 1(STN-LCD). In Figure 34, 181 is the incident light. Generally 181 is the natural light, so that it contains all wave lengths in the visible region. The polarising direction of each light is random. After passing through a linear polariser 182, the incident light 181 becomes a set of linearly polarised lights 1831, 1832, 1833 and so on. 1831, 1832 and 1833 mean the polarised light whose wave lengths are 450 nm, 550 nm and 650 nm respectively. It is obvious that the set of lights contain other wave length light than 1831, 1832 and 1833. Here these three wave lengths are shown as being representative of blue, green and red. A set of lights 1831, 1832 and 1833 passes through a liquid crystal cell 184. The liquid crystal in the liquid crystal cell is the optically uniaxial anisotropic media and, in the liquid crystal cell, it forms a twisted orientation. How they change their polarising state when the lights 1831, 1832 and 1833 pass through the above mentioned liquid crystal layer, they change their polarising state is precisely predictable by way of calculations mentioned herein below. For example, in the case of the STN-LCD, the spectrum of which is shown in Figure 36, the polarising states become those shown as 1851, 1852 and 1853 respectively. Generally speaking, after passing through the anisotropic media, the linearly polarised light becomes elliptically polarised light just like 1851, 1852 and 1853. The polarised lights 1851, 1852 and 1853 show that there is a difference of polarising state in accordance with the wave length. These polarised lights 1851, 1852 and 1853 finally passes through a linear polariser 186. It will easily be understood that, after passing through the polariser 186, each light becomes those shown as 1871, 1872 and 1873 respectively. This is because only the component of each light, which corresponds to the polarising direction of the polariser 186, can pass through. It can be observed that, in this case, the intensity of green light (550 nm wave length) is stronger than that of blue (450 nm) and red (650 nm). The spectral expression of this result is the "I" in Figure 36. Figure 37 is the plot of the same result on the colour co-ordinate. Thus, the prior STN-LCD cannot help avoiding a coloured appearance because of the optical anisotropy (birefringence) of the liquid crystal layer. In Figure 37 the white point is indicated at 210 and measured points at 211 and 212.

Figure 19 is a schematic drawing to explain the "off-state" optical characteristics of the present invention. Comparing Figure 19 with Figure 34, the difference is that, the present invention, similar to Figure 19, has the additional component 428 which is the optically anisotropic substance. For the convenience of explanation, the conditions of each component, except the optically anisotropic substance 428 and the polariser 426, are taken to be the same as that in the case of prior STN-LCD shown in Figure 34, and whose spectrum is shown in Figure 36. Thus, the polarising state of each wave length light 251, 252 and 253 is exactly the same as 1851, 1852 and 1853 in Figure 34 respectively. Each elliptically polarised light 251, 252 and 253 passes through the optically anisotropic substance 428. This optically anisotropic substance 428 functions to cancel the difference of polarised states that are caused by passing through

the liquid cell 424. In order to make it clear, the optical function of the liquid crystal cell 424, is defined as "M". The polarised states of the lights 231, 232 and 233 are defined as "p". There is then obtained the formula:

$$P' = M * P \quad (7)$$

where P' means the polarised states of the lights 251, 252 and 253.

If the optical function of the optically anisotropic substance 428 is given as "$M^{-1}$", where "$M^{-1}$" means the inverse transformation of "M", then there may be obtained the formula:

$$P'' = M^{-1} * P' \quad (8)$$

where p" means the polarised states of the lights 291, 292 and 293. From formulae (7) and (8), there may be obtained the formula:

$$P'' = M^{-1} * M * P \quad (9)$$

It is clear that:

$$M^{-1} * M = I \quad (10)$$

So there is obtained:

$$P'' = P \quad (11)$$

Formula (11) means that the polarised states of the lights 231, 232 and 233 (P) are exactly the same as 291, 292 and 293 (P"). Since the lights 231, 232 and 233 are the states just after passing through the linear polariser 422, so these lights are linearly polarised and their polarising directions are the same. Thus the lights 291, 293 and 293 are also linearly polarised and their polarising directions are the same. If the direction of the polariser 426 corresponds the polarising directions of the lights 291, 293 and 293 these lights can pass through the polariser 426 without change. So the lights 271, 272, 273 are exactly the same as 291, 292 and 293. In this case, the spectrum of the lights (271, 272, 273 and other wave length lights) is identical to the spectrum of the polariser used and shown in Figure 31. (For the present purposes, the absorbance and reflectance by the liquid crystal cell 424 and the optically anisotropic substance 428 can be ignored). A colourless polariser can easily be chosen and used. Thus, the liquid crystal display device of the present invention can be free of colouring.

The question may still be raised of whether the condition of the optically anisotropic substance, that can made the inverse transformation against the transformation by the liquid crystal cell, really exists. The answer to this question is in the affirmative and the Applicant has found that such a condition of the optically anistropic substance exists. Furthermore, such a condition exists, irrespective of what the condition of the liquid crystal cell is.

In order to explain the above condition, the relationship between the liquid crystal cell, the polarised substrate, and the optically anistropic substance in the liquid crystal display device according to the present invention is shown in Figure 20. Figure 20 corresponds to the liquid crystal display device according to the present invention as shown in Figure 18. In Figure 20, 431 is a rubbing direction of the lower electrode substrate of the liquid crystal cell, 432 is a rubbing direction of the upper electrode substrate of the liquid crystal cell, 433 is a direction of optical axis of the surface which is opposed to the liquid crystal cell of the optically anisotropic substance, 434 is a direction of the optical axis of the surface which is opposed to the polarised substrate of the optically anistropic substance, 435 is a direction of polarising axes (absorption axes) of the lower polarised substrate, 436 is a direction of polarising axes (absorption axes) of the upper polarised substrate, 437 is an angle between the direction of polarising axes of the upper polarised substrate 436 and the direction of optical axis of the optically anisotropic substance 434, 438 is an angle between the direction of optical axis of the optically anisotropic substance 433 and 434, 439 is an angle between 433 and 432, 440 is a size of the twist angle of the liquid crystal layer in the liquid crystal cell, and 430 is an angle between the rubbing direction of the liquid crystal cell 431 and the direction of polarising axes of the lower polarised substrate 435, respectively.

The conditions of the liquid crystal cell are made to the same as in the prior STN-LCD as shown in the spectrum of Figure 36, namely, the twist angle of the liquid crystal layer in the liquid crystal cell 440 is made to be about 200°, and An x d is made to be about 0.9 μm. So, the whitening under these conditions may be explained as follows. In the case where there is no optically anisotropic substance, the spectrum becomes the same as shown in Figure 36, namely, it enters into the colouring state. However, in the case where, for example, the liquid crystal cell is used as the optically anisotropic substance, wherein the twist angle of the liquid crystal layer 438 is -200° (namely, the helix is opposite with respect to the liquid crystal cell for displaying, and the absolute value of the twist angle is equal to the liquid crystal cell) and An x d is about 0.9 μm, as shown in Figure 21, the spectrum in the off state becomes approximately flat. The other appertaining conditions are that 437 is 45°, 430 is 45°, and 439 is 90°. The spectrum of Figure 21, which is plotted on a chromaticity diagram is shown in Figure 22. It is clear that an approximately white colour can be obtained in comparison with the prior method as shown in Figure 36. In Figure 22 the white point is indicated at 450 and the measured value is indicated at 451.

The above shows that the condition of the optically anisotropic substance that can make the inverse transformation against that of the liquid crystal cell exists. So Figure 19 is not imaginary, but it is reality. So the question may then arise as to what kind of conditions the optically anisotropic substance must satisfy. The answers are as follows:

(1) the product of birefringence (Δn) and layer thickness (d) Δ n * d for both the liquid crystal cell and the optically anisotropic substance is the same, viz:

$$(\Delta n * d)\ \text{LC cell} = (\Delta n * d)\ \text{optically anisotropic substance}$$

(2) the twist angle of the liquid crystal layer in the liquid crystal cell is the same as the twist angle of the optically anisotropic substance, and the twist directions of both of them are opposed to each other.

(3) the angle 439 that is the angle between the rubbing direction of the upper electrode substrate 432 and the optical axis of the optically anisotropic substance on the surface that faces the liquid crystal cell 433 is 90 degrees.

When the above three conditions are satisfied, the off state of the liquid crystal display device of the present invention is free of colouring, no matter how the value of Δ n * d and the twist angle would be.

The above explanation is all for the "decolouring" of the off state. In the present invention, the colouring problem in the on state may also be solved. It is complicated to explain the reasons of "decolouring" in the on state. Nevertheless, the liquid crystal display device of the present invention is free of colouring even in the on state.

As explained above, it is necessary, for being free of colouring in the off state, to satisfy the above explained three conditions. However, in many cases, it is not necessary for decolouring to satisfy the three conditions. Figure 23 is a drawing which is given to explain such conditions. Figure 23 corresponds to Figure 19 except that the polarising states of the lights 691, 692 and 693, those are the states after passing through the optically anisotropic substance 68, are not linearly polarised, unlike the lights 291, 292 and 293 in Figure 19. These lights are slightly elliptically polarised and the directions of polarising axes are different. Consequently, the intensity of the lights 671, 672 and 673 show a small wave length dependency. For example, in the case of the conditions disclosed in Example 18, the spectrum of the off state is shown in Figure 25 and the plot on the colour co-ordinate is shown in Figure 26. In the conditions of Example 18, just like the lights 691, 692 and 693 in Figure 23, the polarising states after passing through the optically anisotropic substance are elliptically polarised. However, as shown in Figure 26, it has almost no colour. Thus, there exists a decolouring condition of optically anisotropic substance, even in the conditions that will not satisfy the above three conditions. In Figure 26 the white point is indicated at 90 and the measured value is indicated at 91.

Figure 24 shows the condition in the structure shown in Figure 23. Thus, Figure 24 shows the relationship between the optically anisotropic substance, the liquid crystal cell and the polariser in Example 18. In Figure 24, 70 is the direction of the polarising axis (absorption axis) of the upper polariser, 71 is the direction of the optical axis of the optically anisotropic substance, 72 is the rubbing direction of the upper electrode substrate of the liquid crystal cell, 73 is the rubbing direction of the lower electrode substrate of the liquid crystal cell, 74 is the direction of the polarising axis of the upper polariser and the direction 72 of the optical axis of the optically anisotropic substance, 76 is an angle between the direction 71 of the optical axis of the optically anisotropic substance and the rubbing direction 72 of the upper electrode substance of the liquid crystal cell, 77 is the size of the twist of the liquid crystal layer of the liquid crystal cell, and 78 is an angle between the rubbing direction 73 of the lower electrode substrate of the liquid crystal cell and the direction 74 of the polarising axis of the lower polariser.

For several practical reasons, the conditions that will not satisfy the above three conditions are preferable. One of these reasons is that the commercially available polarisers have, more or less, colour. An example is shown in Figure 31. In Figure 31, both the spectrum of I and II are not perfectly flat. This means more or less coloured. It is possible to get a better decolouring state by choosing proper conditions of the optically anisotropic substance, other than the above

three conditions. This is possible for both the on state and the off state. Another reason is the viewable angle. In some liquid crystal cell conditions, other conditions of the optically anisotropic substance is more preferable for a viewable angle than the above three conditions.

The above is an explanation of the various kinds of optically anisotropic substance that may be employed in the structure shown in Figure 18. In the structure of Figure 18, the optically anisotropic substance is located above the liquid crystal cell 412. However, it is to be appreciated that the upper and lower relationship has no relation to the subject matter of the present invention. This is also applicable to the positioning relationship between the liquid crystal cell 412 and the optically anisotropic substance in Figures 19 and 23.

The above explanation relates to the condition of having a high transmission of the off state, namely the normally-on state. An explanation will now be given with respect to the condition having the low transmission of the off state, namely the normally-off state. Thus, the polarising light 291, 292, 293 and so on cannot pass through the polarising plate 426 so long as the direction of the polarised axis of the polarised plate 426 as shown in Figure 19 is perpendicular to the polarised substrate 422. Therefore, the spectrum of the transmitting light coincides with the spectrum of the polarised plate in the state of cross nicol as shown in Figure 31 by II. (For the present purposes, the light absorption of the liquid crystal cell and the optically anisotropic substance and so on can be ignored). The condition is the most dark condition which is obtained by using the polarised plate as shown in Figure 31. Therefore, according to the present invention, the spectral properties having the desirable best flatness can be obtained by using the optically anisotropic substance even in the normally-off state. Thus, the removal of the colouring can be realised in every case.

A practical method for calculating the change of polarising state of the light passing through the optically anisotropic substance such like the liquid crystal cell and so on, will now be given. The incident light to the optically anisotropic substance is generally the elliptically polarised light. The reference trace of the elliptically polarised light extending to the positive direction of the Z axis is represented with the column vector, in which x and y components are defined as the element as below:-

$$E = \begin{vmatrix} a_x \exp i(\omega t + \psi_x) \\ a_y \exp i(\omega t + \psi_y) \end{vmatrix} \qquad (12)$$

In the above formula 12, $a_i$ is an amplitude of the i component, $\omega$ is a circular frequency, and $\Psi$ is a phase angle of the i component, respectively. However, at this time, since the absolute phase of the vibration has no relation thereto, the optical frequency and the absolute phase of the formula (12) are removed. Further, the polarised condition is represented with the normalised Jones vector as the following formula (13), in which the vibration of each component is caused to be normalised:

$$E = \begin{vmatrix} \dfrac{a_x}{\sqrt{a_x^2 + a_y^2}} (\exp(-i\delta/2) \\ \dfrac{a_y}{\sqrt{a_x^2 + a_y^2}} \exp(i\delta/2) \end{vmatrix}$$

$$(\delta \equiv \psi_y - \psi_x) \qquad (13)$$

The polarised light E of the formula (13) becomes a polarised light E', as the result of changing the polarising state by passing through the optically anisotropic substance. The optically anisotropic substance is represented by a 2 x 2 Jones matrix which performs the above transformation. For example, in the case where the optically anisotropic substance is a uniaxial linear retarder such like the polymer layer, the Jones matrix is represented as follows:

$$R_{\Delta,\theta} = \begin{vmatrix} \cos^2\theta \exp(i\Delta/2) + \sin^2\theta(-i\Delta/2) & 2i\sin\theta\cos\theta\sin(\Delta/2) \\ 2i\sin\theta\cos\theta\sin(\Delta/2) & \cos^2\theta\exp(-i\Delta/2) + \sin^2\theta\exp(i\Delta/2) \end{vmatrix}$$

In the above formula (14) θ is an angle between the fast axis of the linear retarder and the x axis, and Δ is a retardation. The retardation is defined as $\Delta n = 2\ n\ x\ d/\lambda$ using Δn x d of the linear retarder and the wavelength λ of the light.

The polarising state passing through the polymer layer is found by functioning the Jones matrix $R_{\Delta\theta}$, of the formula (14) from the left side of the incident light vector E as follows:

$$E' = R_{\Delta,\theta}E$$

In the case where the optically anisotropic substance is formed by laminating some polymer layers, the following formula is found by functioning the Jones matrix of the formula (14) one after another in accordance with the order that the light passes through from the left side of the incident light vector

$$E' = R_{\Delta n,\theta n}\ R_{\Delta n\text{-}1,\theta n\text{-}1} \cdots\ R_{\Delta 2,\theta 2}R_{\Delta 1,\theta 1}E$$

Where the optically anisotropic substance is the liquid crystal cell, it becomes difficult as the retarder due to the twist orientation of the liquid crystal molecule. However, if the liquid crystal layer is divided into considerably many layers as shown in Figure 27(a), it can be represented by the subsequences of the liquid crystal layers which is not twisted as shown in Figure 27(b). Since the liquid crystal layer which is not twisted, is the uniaxial linear retarder as well as the polymer layer the polarising state of the light passing through the liquid crystal cell can be found by the same method as the case of laminating some polymer layers as mentioned above.

With using the above method, it is to be given that the angle 440 of Figure 20 is 200°, the angle 438 is -200°, the angle 430 is 45°, the angle 437 is 45°, the angle 439 is 90°, and both of Δn x d of the liquid crystal cell for displaying and the liquid crystal cell of the optically anisotropic substance are 0.9 μm, respectively. Under these conditions, the polarising state is calculated by dividing the liquid crystal layer into 20 pieces. The transitions of the polarising state are shown in Figures 28 to 30. Figures 28, 29 and 30 show the transitions of the polarising state whose wave length is 450 nm, 550 nm and 650 nm, respectively. For example, in Figure 28(a), the polarising state of the linearly polarised light 121, which is incident light to the liquid crystal cell for displaying, transits to 122, 123 and 124 every fifth layer; and at last the cell is injected at the elliptically polarised light of 125. In Figure 28(b), the resulting elliptically polarised light 125 becomes the incident light to the optically anisotropic substance, and the polarising state of the elliptically polarised light 125 transits to 126, 127 and 128 every fifth layer; and at last the optically anisotropic substance is injected at the linearly polarised light of 129. In each above mentioned course, the transition of the polarising state by the optically anisotropic substance as shown in the Figures (b) corresponds to the entirely opposite transition of that by the liquid crystal cell for displaying as shown in the Figures (a). Therefore, the incident to the liquid crystal cell injects the optically anisotropic substance at entirely the same polarising state. Since the effect is obtained regardless of the wave length of the light as clearly shown from Figures 29 and 30, it is possible in the liquid crystal display device having the structure according to the present invention that the colouring at the time of off state is entirely dissoluted, and that the required whitening is obtained.

It is to be appreciated that the embodiments of the invention described above with reference to the examples have been given by way of example only and that modifications may be effected. Thus, for example, the explanations given above for Figures 18 to 37 may apply where appropriate to Figures 1 to 17.

Attention is directed to co-pending European Patent Application 97105751.8 which is a divisional application herefrom.

## Claims

**1.** A liquid crystal display device comprising: a liquid crystal display cell (6) including a pair of substrates (7, 8) with electrodes formed on their inner opposing surfaces, and a nematic liquid crystal layer (9) disposed between said substrates (7, 8) and oriented at a twist angle not smaller than 120°; and first and second polarising plates (10, 1) between which said display cell (6) is disposed; wherein the first polarising plate (10) has a polarisation axis which is set in a certain angle with respect to the direction of the molecule longer axis of said display cell (6) adjacent the substrate (8) closest to the first polarising plate (10) and other than the direction substantially perpendicular or substantially parallel to said direction of the said molecule longer axis, wherein the birefringence dispersion of said display cell (6) produces wavelength dependent changes in polarisation in terms of different changes in direction of the major axes of elliptical polarisation for different wavelengths; the display device being characterised by at least one layer of a compensating optically anisotropic substance (5) disposed between the first and second

polarising plates on one side of the display cell (6); wherein the second polarising plate (1) has a polarisation axis which is set in a certain angle with respect to the optical axis of said optically anisotropic substance (5) and other than the direction substantially perpendicular or substantially parallel to said optical axis; and wherein the Δ n x d and, if the substance has a twist of optical axis, the twist angle of said compensating optically anisotropic substance (5) is/are determined in relation to the twist angle and the Δn x d value of said nematic liquid crystal layer (9) of said display cell (6) in such a manner that said compensating optically anisotropic substance (5) produces a compensating wavelength dependent change in polarisation whereby the wavelength dependent polarisation changes within the display cell are compensated such that the major axes of elliptical polarisation for different wavelengths are brought back to substantially the same direction as each other within the device and colouring of the display is thereby substantially eliminated.

**2.** A liquid crystal display device according to claim 1 characterised in that the polarising axis direction of each of the polarising plates (1, 10) makes an angle between 30° to 60° with the molecule longer axis direction or optical axis direction respectively of the display cell (6) and the optically anisotropic substance (5).

**3.** A liquid crystal display device according to claim 1 or claim 2 characterised in the Δ n x d of the twist nematic liquid crystal layer (9) of said display cell (6) is in the range of 0.6 to 1.5 μm.

**4.** A liquid crystal display device according to any one of the preceding claims characterised in that the optically anisotropic substance (5) is a liquid crystal which is oriented between two opposite substrates.

**5.** A liquid crystal display device according to claim 4 characterised in that the twist angle of the optically anisotropic liquid crystal (5) for compensating for colour of said display is in the range between approximately -550° and approximately +300°.

**6.** A liquid crystal display device according to claim 4 or claim 5 characterised in that Δ n x d of the optically anisotropic liquid crystal (5) for compensating for colour of said display is in the range of 0.7 and 1 μm.

**7.** A liquid crystal display device according to any one of claims 4 to 6 characterised in that the orientation of the liquid crystal molecules at the surfaces where the nematic liquid crystal of said display cell (6) and the optically anisotropic liquid crystal (5) for compensating for colour of said display face each other is substantially 90°.

**8.** A liquid crystal display device according to any one of claims 4 to 7 characterised in that the optically anisotropic liquid crystal (5) for compensating for colour of said display is formed or oriented nematic liquid crystal or cholesteric liquid crystal.

**9.** A liquid crystal display device according to any one of claims 4 to 7 characterised in that the optically anisotropic liquid crystal (5) for compensating for colour of said display is formed of twistedly oriented nematic liquid crystal.

**10.** A liquid crystal display device according to any one of preceding claims characterised by said optically anisotropic substance (5) comprising a plurality of layers with cumulatively produce the said compensating wavelength dependent change in polarisation.

**11.** A liquid crystal display device according to any one of claims 8 and 9 characterised in that the nematic liquid crystal of said display cell (6) and the nematic liquid crystal (5) of the optically anisotropic liquid crystal for compensating for colour of said display have the opposite twist direction to each other.

**12.** A liquid crystal display device according to any one of claims 8, 9 or 11 characterised in that the nematic liquid crystal of said display cell (6) and the nematic liquid crystal (5) of the optically anisotropic liquid crystal for compensating for colour of said display have substantially equal twist angle and Δ n x d to each other.

**13.** A liquid crystal display device according to any one of claims 1 to 3 characterised in that the optically anisotropic substance (5) is in a polymeric film state.

**14.** A liquid crystal display device according to claim 13 characterised in that if more than two layers of the optically anisotropic substance (5) are used, the directions of optic axes between at least two layers are different.

**15.** A liquid crystal display device according to claim 13 or claim 14 characterised in that said polymeric film is a liquid

crystal polymer film.

16. A liquid crystal display device according to claim 13 characterised in that a plurality of compensating polymeric films are disposed between the liquid crystal display cell (6) and the second polarising plate (1).

17. A liquid crystal display device as claimed in claim 13 characterised in that the said polymeric film and one of the polarising plates are formed as a unitary component (58).

18. A liquid crystal display device according to any one of claims 13, 16, or 17 characterised in that the or each polymeric film is a stretched film selected from diacetyl cellulose, polyethylene terephthalate, cellulose diacetate, polyvinyl alcohol, polyamide, polyether sulfone, acryl, polysulfone, polyimide and polyolefin.

19. A liquid crystal display device according to claim 4 characterised in that the liquid crystal of the display device (6) has a twist angle of +200° and a Δ n x d value of 0.9 μm and that the said optically anisotropic liquid crystal (5) for colour compensation has a twist angle in the range of approximately +300° to approximately -300° and has a Δ n x d value in the range of approximately 0.4 μm to approximately 1.4 μm.

20. A liquid crystal display device according to claim 4 characterised in that the liquid crystal of the display device (6) has a twist angle of +250° and a Δ n x d value of 0.9 μm and that the said optically anisotropic liquid crystal (5) for colour compensation has a twist angle in the range of approximately +100° to approximately -550° and has a Δ n x d value in the range of approximately 0.4 μm to approximately 1.5 μm.

21. A liquid crystal display device according to claim 4 characterised in that the liquid crystal of the display device (6) has a twist angle of +120° and a Δ n x d value of 0.9 μm and that the said optically anisotropic liquid crystal (5) for colour compensation has a twist angle in the range of approximately +100° to approximately -400° and has a Δ n x d value in the range of approximately 0.5 μm to approximately 1.4 μm.

22. A liquid crystal display device according to claim 4 characterised in that the liquid crystal of the display device (6) has a twist angle of +200° and a Δ n x d value of 0.6 μm and that the said optically anisotropic liquid crystal (5) for colour compensation has a twist angle in the range of approximately +100° to approximately -350° and has a Δ n x d value in the range of approximately 0.2 μm to approximately 1.3 μm.

23. A liquid crystal display device according to claim 4 characterised in that the liquid crystal of the display device (6) has a twist angle of +200° and a Δ n x d value of 1.5 μm and that the said optically anisotropic liquid crystal (5) for colour compensation has a twist angle in the range of approximately +100° to approximately -400° and has a Δ n x d value in the range of approximately 0.9 μm to approximately 1.9 μm.

24. A liquid crystal display device according to claim 4 characterised in that the liquid crystal of the display device (6) has a twist angle of +350° and a Δ n x d value of 0.9 μm and that the said optically anisotropic liquid crystal (5) for colour compensation has a twist angle in the range of approximately +100° to approximately -550° and has a Δ n x d value in the range of approximately 0.2 μm to approximately 1.5 μm.

## Patentansprüche

1. Flüssigkristallanzeigevorrichtung, die folgendes umfaßt; eine Flüssigkristallanzeigezelle (6), die ein Paar von Substraten (7, 8) mit Elektroden, die an ihren inneren gegenüberliegenden Oberflächen ausgebildet sind, und eine nematische Flüssigkristallschicht (9) einschließt, die zwischen den Substraten (7, 8) angeordnet und in einem Verdrehungswinkel von mindestens 120° ausgerichtet ist; und erste und zweite Polarisationsplatten (10, 1), zwischen denen die Anzeigenzelle (6) angeordnet ist; wobei die erste Polarisationsplatte (10) eine Polarisationsachse aufweist, die in einem bestimmten winkel in bezug auf die Richtung der längeren Molekülachse der Anzeigenzelle (6) benachbart zu dem Substrat (8) angeordnet ist, das sich am nächsten bei der ersten Polarisationsplatte (10) befindet, und nicht in einer Richtung, die im wesentlichen senkrecht oder im wesentlichen parallel zur Richtung der längeren Molekülachse ist, wobei die Doppelbrechungsstreuung der Anzeigenzelle (6) wellenlängenabhängige Veränderungen bei der Polarisation in Form unterschiedlicher Änderungen bei der Richtung der Hauptachsen der elliptischen Polarisation für verschiedene Wellenlängen produziert; wobei die Anzeigenvorrichtung durch mindestens eine Schicht einer kompensierenden optisch anisotropen Substanz (5) gekennzeichnet ist, die zwischen den ersten und zweiten Polarisationsplatten auf einer Seite der Anzeigenzelle (6) angeordnet ist; wobei die zweite

Polarisationsplatte (1) eine Polarisationsachse aufweist, die in einem bestimmten Winkel in bezug auf die optische Achse der optisch anisotropen Substanz (5) angeordnet ist und nicht in einer Richtung, die im wesentlichen senkrecht oder im wesentlichen parallel zur optischen Achse ist; und wobei Δn x d und, falls die Substanz eine Verdrehung der optischen Achse aufweist, der Verdrehungswinkel der kompensierenden optisch anisotropen Substanz (5) in Beziehung zum Verdrehungswinkel und zum Δn x d-Wert der nematischen Flüssigkristallschicht (9) der Anzeigenzelle (6) so bestimmt ist, daß die kompensierende optisch anisotrope Substanz (5) eine kompensierende wellenlängenabhängige Veränderung bei der Polarisation erzeugt, wobei die wellenlängenabhängigen Polarisationsveränderungen innerhalb der Anzeigenzelle so kompensiert sind, daß die Hauptachsen der elliptischen Polarisation für unterschiedliche Wellenlängen in die im wesentlichen salbe Richtung gegenseitig innerhalb der Vorrichtung zurückgebracht sind, und die Färbung der Anzeige dadurch im wesentlichen eliminiert ist.

**2.** Plüssigkristallanzeigenvorrichtung gemäß Anspruch 1, dadurch gekennzeichnet, daß die Polarisationsachsenrichtung der einzelnen Polarisationsplatten (1, 10) einen Winkel von 30° bis 60° mit der Richtung der längeren Molekülachse oder Richtung der optischen Achse der Anzeigenzelle (6) und der optisch anisotropen Substanz (S) bildet.

**3.** Flüssigkristallanzeigenvorrichtung gemäß Anspruch 1 oder Anspruch 2, dadurch gekennzeichnet, daß der Δn x d-Wert der verdrehten nematischen Flüssigkrietallschicht (9) der Anzeigenzelle (6) im Bereich von 0,6 bis 1,5 µm liegt.

**4.** Flüssigkristallanzeigenvorrichtung gemäß einem der vorhergehenden Ansprüche, dadurch gekennzeichnet, daß die optisch anisotrope Substanz (5) ein Flüssigkristall ist, der zwischen zwei gegenüberliegenden Substraten ausgerichtet ist.

**5.** Flüssigkristallanzeigenvorrichtung gemäß Anspruch 4, dadurch gekennzeichnet, daß der Verdrehungswinkel des optisch anisotropen Flüssigkristalls (5) zum Kompensieren der Farbe der Anzeige im Bereich zwischen ungefähr -550° und ungefähr +300° liegt.

**6.** Flüssigkrietallanzeigenvorrichtung gemäß Anspruch 4 oder Anspruch 5, dadurch gekennzeichnet, daß der Δn x d-Wert des optisch anisotropen Flüssigkrietalls (5) zum Kompensieren der Farbe der Anzeige im Bereich zwischen 0,7 und 1 µm liegt.

**7.** Flüssigkristallanzeigenvorrichtung gemäß einem der Ansprüche 4 bis 6, dadurch gekennzeichnet, daß die Ausrichtung der Flüssigkristallmoleküle an den Oberflächen, an denen der nematische Flüssigkristall der Anzeigenzelle (6) und der optisch anisotrope Flüssigkristall (5) zum Kompensieren der Farbe der Anzeige einander gegenüberliegen, im wesentlichen 90° beträgt.

**8.** Flüssigkristallanzeigenvorrichtung gemäß einem der Ansprüche 4 bis 7, dadurch gekennzeichnet, daß der optisch anisotrope Flüssigkristall (5) zum Kompensieren der Farbe der Anzeige aus einem ausgerichteten nematischen Flüssigkristall oder cholesterischen Flüssigkristall gebildet ist.

**9.** Flüssigkristallanzeigenvorrichtung gemäß einem der Ansprüche 4 bis 7, dadurch gekennzeichnet, daß der optisch anisotrope Flüssigkristall (5) zum Kompensieren der Farbe der Anzeige aus verdreht ausgerichtetem, nematischen Flüssigkristall gebildet ist.

**10.** Flüssigkristallanzeigenvorrichtung gemäß einem der vorhergehenden Ansprüche, dadurch gekennzeichnet, daß die optisch anisotrope Substanz (5) eine Mehrzahl an Schichten umfaßt, welche die kompensierende wellenlänganabhängige Veränderung bei der Polarisation kumulativ erzeugen.

**11.** Flüssigkrietallanzeigenvorrichtung gemäß einem der Ansprüche 8 und 9, dadurch gekennzeichnet, daß der nematische Flüssigkristall der Anzeigenzelle (6) und der nematische Flüssigkristall (5) des optisch anisotropen Flüssigkristalls zum Kompensieren der Farbe der Anzeige zueinander die entgegengesetzte Verdrehungsrichtung aufweisen.

**12.** Flüssigkristallanzeigenvorrichtung gemäß einem der Ansprüche 8, 9 oder 11, dadurch gekennzeichnet, daß der nematische Flüssigkristall der Anzeigenzelle (6) und der nematische Flüssigkristall (5) des optisch anisotropen Flüssigkristalle zum Kompensieren der Farbe der Anzeige zueinander im wesentlichen denselben Verdrehungswinkel und Δn x d-Wert aufweisen.

13. Flüssigkristallanzeigenvorrichtung gemäß einem der Ansprüche 1 bis 3, dadurch gekennzeichnet, daß die optisch anisotrope Substanz (5) in einem Polymerfilmzustand ist.

14. Flüssigkristallanzeigenvorrichtung gemäß Anspruch 13, dadurch gekennzeichnet, daß, wenn mehr als zwei Schichten der optisch anisotropen Substanz (5) verwendet werden, die Richtungen der optischen Achsen zwischen mindestens zwei Schichten unterschiedlich sind.

15. Flüssigkristallanzeigenvorrichtung gemäß Anspruch 13 oder Anspruch 14, dadurch gekennzeichnet, daß der Polymerfilm ein Flüssigkristallpolymerfilm ist.

16. Flüssigkristallanzeigenvorrichtung gemäß Anspruch 13, dadurch gekennzeichnet, daß eine Mehrzahl an kompensierenden Polymerfilmen zwischen der Flüssigkristallanzeigenzelle (6) und der zweiten Polarisationsplatte (1) angeordnet sind.

17. Flüssigkristallanzeigenvorrichtung gemäß Anspruch 13, dadurch gekennzeichnet, daß der Polymerfilm und eine der Polarisationsplatten als ein einheitlicher Bestandteil (58) gebildet sind.

18. Flüssigkristallanzeigenvorrichtung gemäß einem der Ansprüche 13, 16 oder 17, dadurch gekennzeichnet, daß der oder jeder Polymerfilm ein gestreckter Film ist, der aus Diacetylzellulose, Polyethylenterephthalat, Zellulosediacetat, Polyvinylalkohol, Polyamid, Polyethersulfon, Acryl, Polysulfon, Polyimid und Polyolefin ausgewählt ist.

19. Flüssigkristallanzeigenvorrichtung gemäß Anspruch 4, dadurch gekennzeichnet, daß der Flüssigkristall der Anzeigenvorrichtung (6) einen Verdrehungswinkel von + 200° und einen Δn x d-Wert von 0,9 µm aufweist, und daß der optisch anisotrope Flüssigkristall (5) zur Farbkompensierung einen Verdrehungswinkel aufweist, der im Bereich von ungefähr +300° bis ungefähr -300° liegt, und einen Δn x d-Wert besitzt, der im Bereich von ungefähr 0,4 µm bis ungefähr 1,4 µm liegt.

20. Flüssigkristallanzeigenvorrichtung gemäß Anspruch 4, dadurch gekennzeichnet, daß der Flüssigkristall der Anzeigenvorrichtung (6) einen Verdrehungswinkel von +250° und einen Δn x d-Wert von 0,9 µm aufweist und daß der optisch anisotrope Flüssigkristall (5) zur Farbkompensierung einen Verdrehungswinkel im Bereich von etwa +100° bis etwa -550° und einen Δn x d-Wert im Bereich von etwa 0,4 µm bis etwa 1,5 µm aufweist.

21. Flüssigkristallanzeigenvorrichtung gemäß Anspruch 4, dadurch gekennzeichnet, daß der Flüssigkristall der Anzeigenvorrichtung (6) einen Verdrehungswinkel von +120° und einen Δn x d-Wert von 0,9 µm aufweist und daß der optisch anisotrope Flüssigkristall (5) zur Farbkompensierung einen Verdrehungswinkel im Bereich von etwa +100° bis etwa -400° und einen Δn x d-Wert im Bereich von etwa 0,5 µm bis etwa 1,4 µm aufweist.

22. Flüssigkristallanzeigenvorrichtung gemäß Anspruch 4, dadurch gekennzeichnet, daß der Flüssigkristall der Anzeigenvorrichtung (6) einen Verdrehungswinkel von +200° und einen Δn x d-Wert von 0,6 µm aufweist und daß der optisch anisotrope Flüssigkristall (5) zur Farbkompensierung einen Verdrehungswinkel im Bereich von etwa +100° bis etwa -350° und einen Δn x d-Wert im Bereich von etwa 0,2 µm bis etwa 1,3 µm aufweist.

23. Flüssigkristallanzeigenvorrichtung gemäß Anspruch 4, dadurch gekennzeichnet, daß der Flüssigkristall der Anzeigenvorrichtung (6) einen Verdrehungswinkel von +200° und einen Δn x d-Wert von 1,5 µm aufweist und daß der optisch anisotrope Flüssigkristall (5) zur Farbkompensierung einen Verdrehungswinkel im Bereich von etwa +100° bis etwa -400° und einen Δn x d-Wert im Bereich von etwa 0,9 µm bis etwa 1,9 µm aufweist.

24. Flüssigkristallanzeigenvorrichtung gemäß Anspruch 4, dadurch gekennzeichnet, daß der Flüssigkristall der Anzeigenvorrichtung (6) einen Verdrehungswinkel von +350° und einen Δn x d-Wert von 0,9 µm aufweist und daß der optisch anisotrope Flüssigkristall (5) zur Farbkompensierung einen Verdrehungswinkel im Bereich von etwa +100° bis etwa -550° und einen Δn x d-Wert im Bereich von etwa 0,2 µm bis etwa 1,5 µm aufweist.

**Revendications**

1. Dispositif d'affichage à cristaux liquides comprenant : une cellule (6) d'affichage à cristaux liquides comprenant une paire de substrats (7, 8) comportant des électrodes formées sur leurs surfaces intérieures opposées, et une couche (9) d'un cristal liquide nématique disposée entre lesdits substrats (7, 8) et orientée selon un angle de

torsion non inférieur à 120° ; et une première et une deuxième plaques de polarisation (10, 1) entre lesquelles est disposée ladite cellule d'affichage (6) ; dans lequel la première plaque de polarisation (10) possède un axe de polarisation qui est ajusté à un certain angle par rapport à la direction du grand axe des molécules de ladite cellule d'affichage (6) contiguë au substrat (8) disposé le plus près de la première plaque de polarisation (10), et autre que la direction essentiellement perpendiculaire ou essentiellement parallèle à ladite direction dudit grand axe des molécules, dans lequel la dispersion de la biréfringence de ladite cellule d'affichage (6) produit des changements de polarisation, qui dépendent de la longueur d'onde, exprimés par différents changements de direction du grand axe de la polarisation elliptique pour différentes longueurs d'onde ; le dispositif d'affichage étant caractérisé en ce qu'il comporte au moins une couche compensatrice et optiquement anisotrope (5) ; en ce que ladite deuxième plaque de polarisation (1) possède un axe de polarisation qui est ajusté à un certain angle par rapport à l'axe optique de ladite substance optiquement anisotrope (5) et autre que la direction essentiellement perpendiculaire ou essentiellement parallèle audit axe optique ; et en ce que le $\Delta nxd$ et, si la substance possède une torsion de l'axe optique, l'angle de torsion de ladite substance compensatrice et optiquement anisotrope (5), sont déterminés par rapport à l'angle de torsion et à la valeur de $\Delta nxd$ de ladite couche (9) d'un cristal liquide nématique de ladite cellule d'affichage (6) de telle sorte que ladite substance compensatrice et optiquement anisotrope (5) produise un changement de polarisation, qui dépend de la longueur d'onde de compensation, en conséquence de quoi les changements de polarisation qui dépendent de la longueur d'onde à l'intérieur de la cellule d'affichage sont compensés de façon que les grands axes de la polarisation elliptique, pour différentes longueurs d'onde, soient ramenés essentiellement dans la même direction que celle qu'ils font l'un par rapport à l'autre à l'intérieur du dispositif, ce qui élimine de ce fait presque complètement la coloration de l'affichage.

**2.** Dispositif d'affichage à cristaux liquides selon la revendication 1, caractérisé en ce que la direction de l'axe de polarisation de chacune des plaques de polarisation (1, 10) fait un angle de 30 à 60° avec la direction du grand axe des molécules ou la direction de l'axe optique, respectivement de la cellule d'affichage (6) et de la substance optiquement anisotrope (5).

**3.** Dispositif d'affichage à cristaux liquides selon la revendication 1 ou 2, caractérisé en ce que le Anxd de la couche de cristaux liquides nématique torsadés (9) de ladite cellule d'affichage (6) est compris entre 0,6 et 1,5 μm.

**4.** Dispositif d'affichage à cristaux liquides selon l'une quelconque des revendications précédentes, caractérisé en ce que la substance optiquement anisotrope (5) est un liquide cristal qui est orienté entre deux substrats opposés.

**5.** Dispositif d'affichage à cristaux liquides selon la revendication 4, caractérisé en ce que l'angle de torsion du cristal liquide optiquement anisotrope (5) destiné à compenser la couleur dudit affichage est compris dans l'intervalle d'environ -550° à environ +300°.

**6.** Dispositif d'affichage à cristaux liquides selon la revendication 4 ou 5, caractérisé en ce que le Anxd du cristal liquide optiquement anisotrope (5) destiné à compenser la couleur dudit affichage est compris dans l'intervalle de 0,7 à 1 μm.

**7.** Dispositif d'affichage à cristaux liquides selon l'une quelconque des revendications 4 à 6, caractérisé en ce que l'orientation des molécules du cristal liquide au niveau des surfaces où le cristal liquide nématique de ladite cellule d'affichage (6) et du cristal liquide optiquement anisotrope (5) destiné à compenser la couleur dudit affichage sont en regard l'un de l'autre est essentiellement de 90°.

**8.** Dispositif d'affichage à cristaux liquides selon l'une quelconque des revendications 4 à 7, caractérisé en ce que le cristal liquide optiquement anisotrope (5) destiné à compenser la couleur dudit affichage est constitué d'un cristal liquide nématique orienté ou d'un cristal liquide cholestérique.

**9.** Dispositif d'affichage à cristaux liquides selon l'une quelconque des revendications 4 à 7, caractérisé en ce que le cristal liquide optiquement anisotrope (5) destiné à compenser la couleur dudit affichage est constitué d'un cristal liquide nématique orienté torsadé.

**10.** Dispositif d'affichage à cristaux liquides selon l'une quelconque des revendications précédentes, caractérisé en ce que ladite substance optiquement anisotrope (5) comprend une pluralité de couches qui d'une manière cumulée produisent ledit changement de polarisation qui dépend de la longueur d'onde de compensation.

**11.** Dispositif d'affichage à cristaux liquides selon l'une quelconque des revendications 8 et 9, caractérisé en ce que

le cristal liquide nématique de ladite cellule d'affichage (6) et le cristal liquide nématique (5) du cristal liquide optiquement anisotrope destiné à compenser la couleur dudit affichage ont des directions de torsion opposées l'une à l'autre.

**12.** Dispositif d'affichage à cristaux liquides selon l'une quelconque des revendications 8, 9 ou 11, caractérisé en ce que le cristal liquide nématique de ladite cellule d'affichage (6) et le cristal liquide nématique (5) du cristal liquide optiquement anisotrope destiné à compenser la couleur dudit affichage ont des angles de torsion et des Δnxd essentiellement égaux l'un à l'autre.

**13.** Dispositif d'affichage à cristaux liquides selon l'une quelconque des revendications 1 à 3, caractérisé en ce que la substance optiquement anisotrope (5) se présente sous l'état d'un film polymère.

**14.** Dispositif d'affichage à cristaux liquides selon la revendication 13, caractérisé en ce que, si plus de deux couches de la substance optiquement anisotrope (5) sont utilisées, les directions des axes optiques d'au moins deux couches sont différentes.

**15.** Dispositif d'affichage à cristaux liquides selon la revendication 13 ou 14, caractérisé en ce que ledit film polymère est un film polymère mésomorphe.

**16.** Dispositif d'affichage à cristaux liquides selon la revendication 13, caractérisé en ce qu'une pluralité de films polymères compensateurs sont disposés entre la cellule d'affichage à cristaux liquides (6) et la deuxième plaque de polarisation (1).

**17.** Dispositif d'affichage à cristaux liquides selon la revendication 13, caractérisé en ce que ledit film polymère et l'une des plaques de polarisation sont constitués sous forme d'un composant unitaire (58).

**18.** Dispositif d'affichage à cristaux liquides selon l'une quelconque des revendications 13, 16 ou 17, caractérisé en ce que le ou chaque film polymère est un film étiré choisi parmi la diacétylcellulose, le poly(téléphtalate d'éthylène), le diacétate de cellulose, le poly(alcool vinylique), le polyamide, la polyéthersulfone, les films acryliques, la polysulfone, les polyimides et les polyoléfines.

**19.** Dispositif d'affichage à cristaux liquides selon la revendication 4, caractérisé en ce que le cristal liquide du dispositif d'affichage (6) a un angle de torsion de +200° et une valeur de Δnxd de 0,9 μm et que ledit cristal liquide optiquement anisotrope (5) destiné à la compensation de la couleur a un angle de torsion compris dans l'intervalle d'environ +300° à environ -300° et a une valeur de Δnxd comprise dans l'intervalle d'environ 0,4 μm à environ 1,4 μm.

**20.** Dispositif d'affichage à cristaux liquides selon la revendication 4, caractérisé en ce que le cristal liquide du dispositif d'affichage (6) a un angle de torsion de +250° et une valeur de Δnxd de 0,9 μm, et en ce que ledit cristal liquide optiquement anisotrope (5) destiné à la compensation de la couleur a un angle de torsion compris dans l'intervalle d'environ +100° à environ -550° et a une valeur de Δnxd comprise dans l'intervalle d'environ 0,4 μm à environ 1,5 pm.

**21.** Dispositif d'affichage à cristaux liquides selon la revendication 4, caractérisé en ce que le cristal liquide du dispositif d'affichage (6) a un angle de torsion de +120° et une valeur de Δnxd de 0,9 μm, et en ce que ledit cristal liquide optiquement anisotrope (5) destiné à la compensation de la couleur a un angle de torsion compris dans l'intervalle d'environ +100° à environ -400° et a une valeur de Δnxd comprise dans l'intervalle d'environ 0,5 μm à environ 1,4 μm.

**22.** Dispositif d'affichage à cristaux liquides selon la revendication 4, caractérisé en ce que le cristal liquide du dispositif d'affichage (6) a un angle de torsion de +200° et une valeur de Δnxd de 0,6 μm, et en ce que ledit cristal liquide optiquement anisotrope (5) destiné à la compensation de la couleur a un angle de torsion compris dans l'intervalle d'environ +100° à environ -350° et a une valeur de Δnxd comprise dans l'intervalle d'environ 0,2 μm à environ 1,3 μm.

**23.** Dispositif d'affichage à cristaux liquides selon la revendication 4, caractérisé en ce que le cristal liquide du dispositif d'affichage (6) a un angle de torsion de +200° et une valeur de Δnxd de 1,5 μm, et en ce que ledit cristal liquide optiquement anisotrope (5) destiné à la compensation de la couleur a un angle de torsion compris dans l'intervalle d'environ +100° à environ -400° et a une valeur de Δnxd comprise dans l'intervalle d'environ 0,9 μm à environ 1,9

µm.

**24.** Dispositif d'affichage à cristaux liquides selon la revendication 4, caractérisé en ce que le cristal liquide du dispositif d'affichage (6) a un angle de torsion de +350° et une valeur de Δnxd de 0,9 µm, et en ce que ledit cristal liquide optiquement anisotrope (5) destiné à la compensation de la couleur a un angle de torsion compris dans l'intervalle d'environ +100° à environ -550° et a une valeur de Δnxd comprise dans l'intervalle d'environ 0,2 µm à environ 1,5 µm.

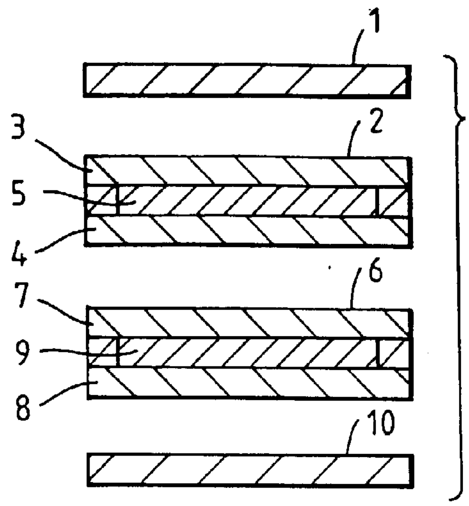


Fig.1.

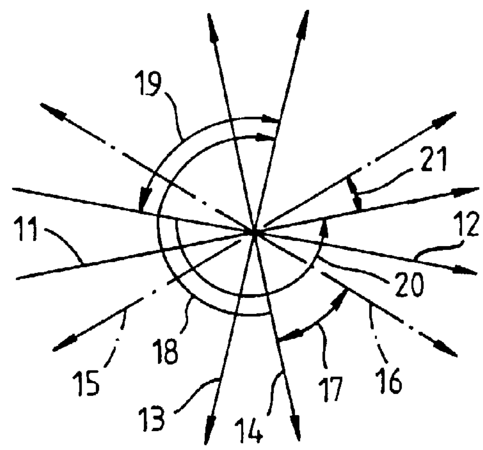


Fig.2.

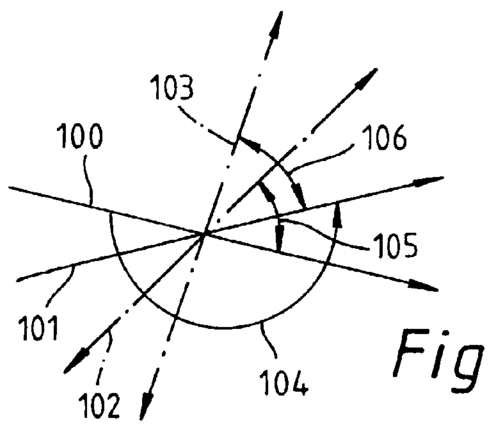


Fig.3.

Fig.4.

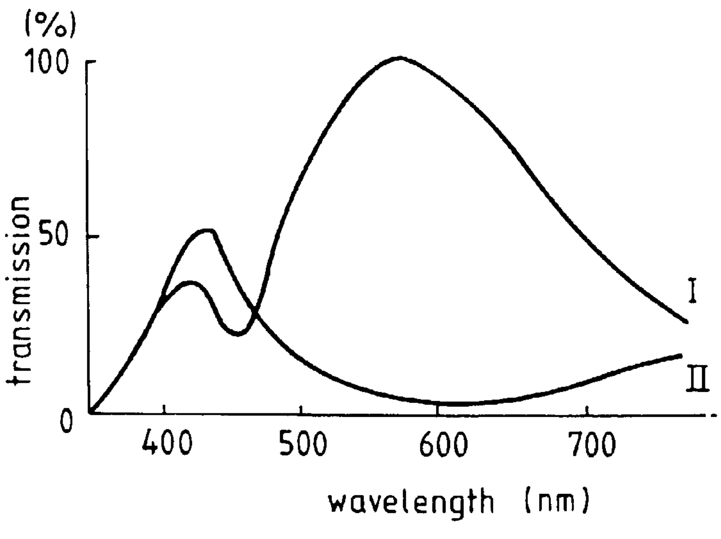

Fig. 5.

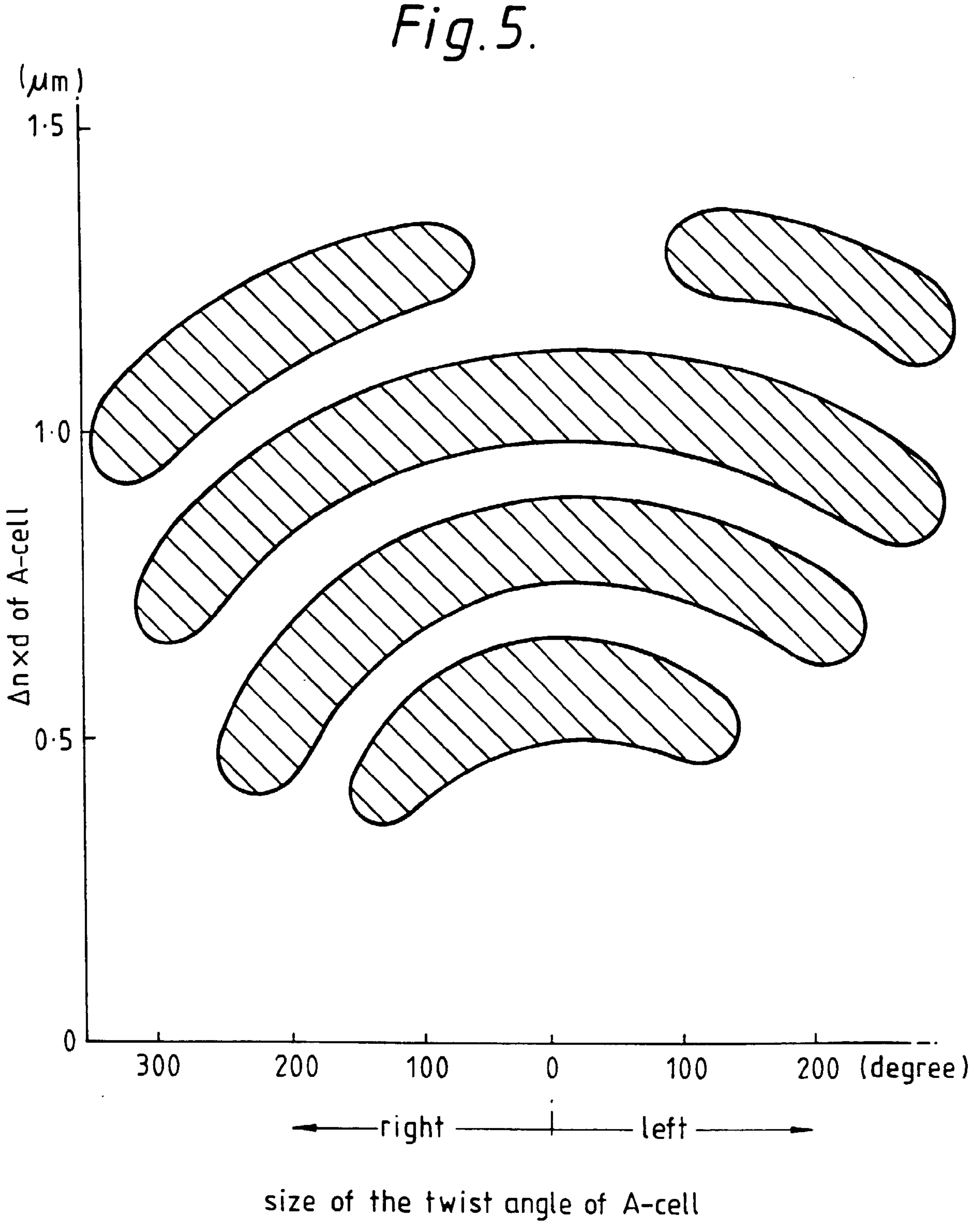
(μm)
1·5
1·0
0·5
0
Δn×d of A-cell
300
200
100
0
100
200 (degree)
right
left
size of the twist angle of A-cell

Fig.6.

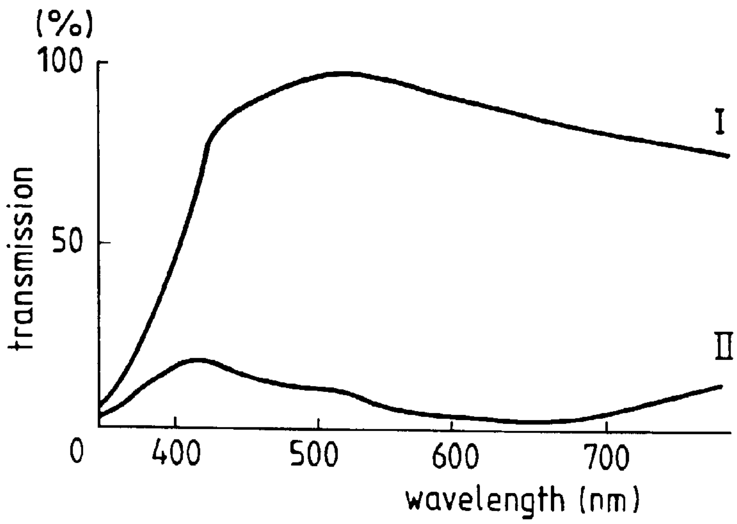


Fig.7.

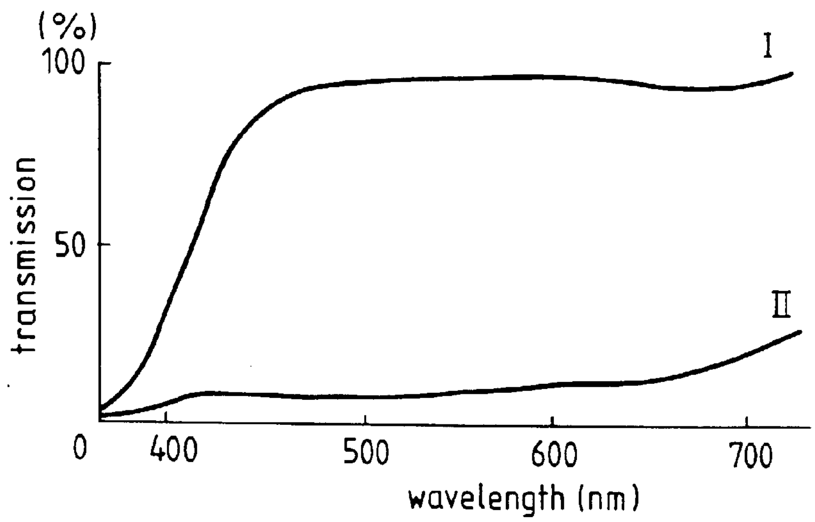


Fig.8.

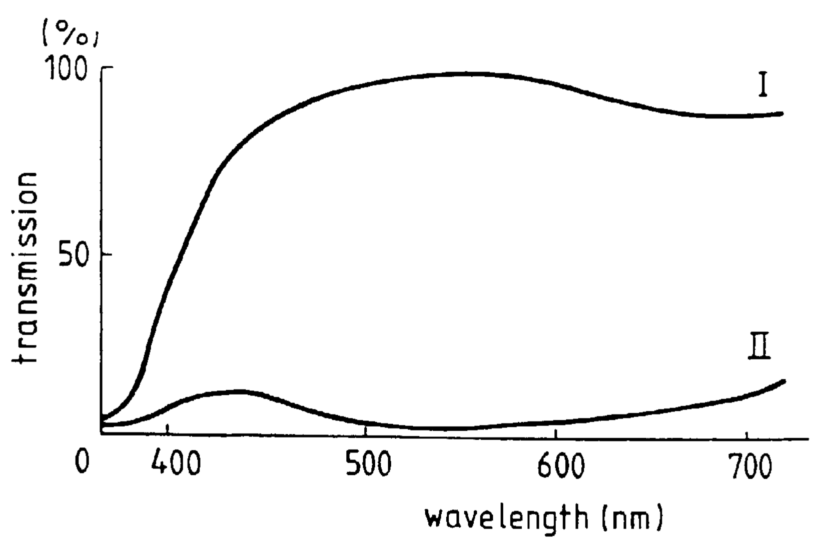

Fig.9.

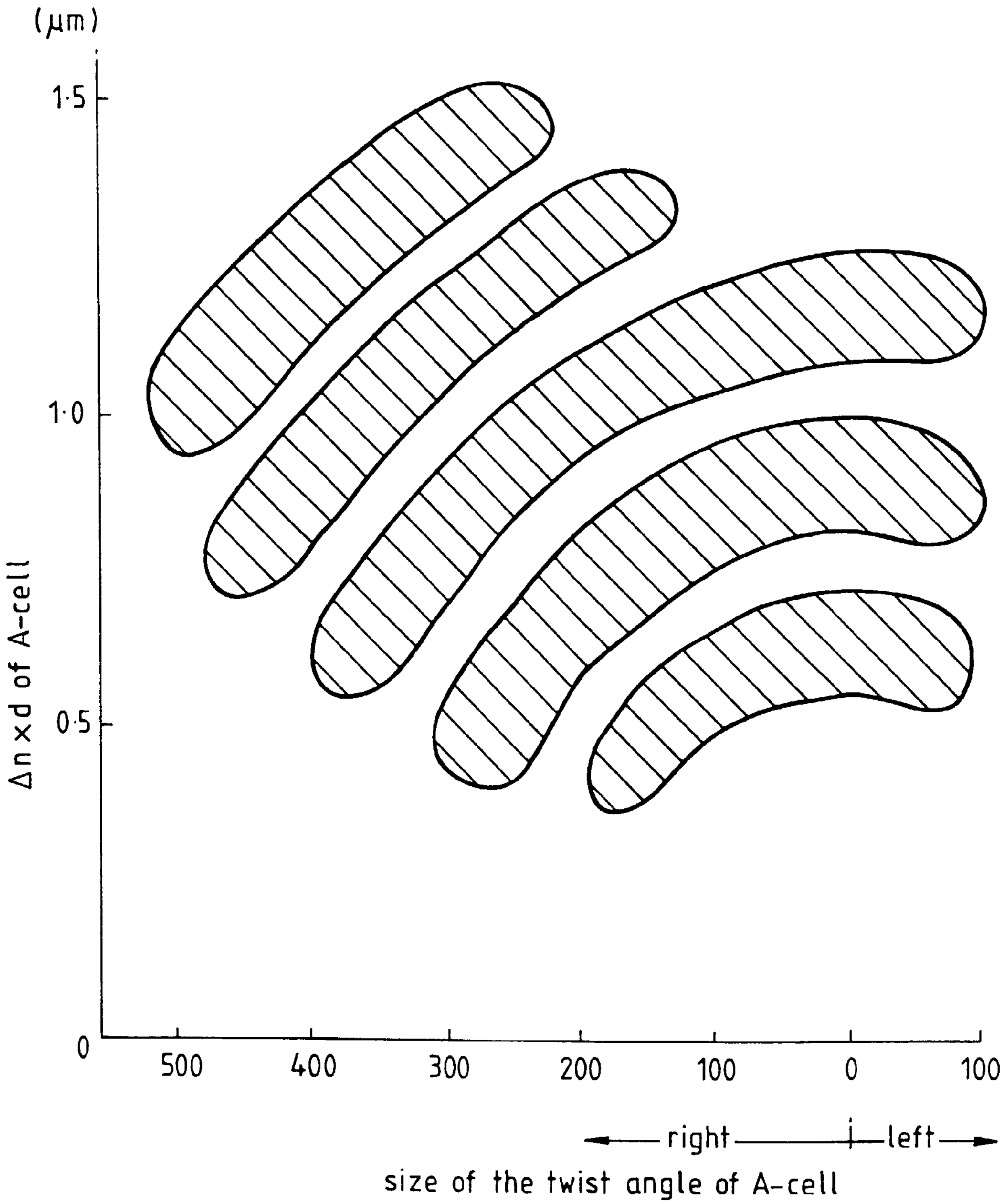
(μm)
1·5
1·0
0·5
0
Δn×d of A-cell
500
400
300
200
100
0
100
right
left
size of the twist angle of A-cell

Fig.10.

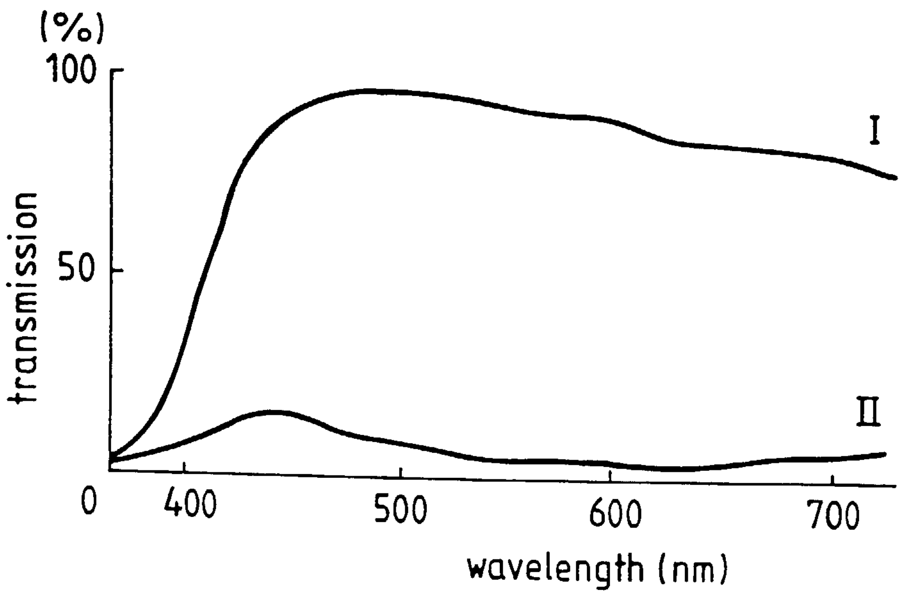
(%)
100
50
0
transmission
I
II
400
500
600
700
wavelength (nm)

Fig.15.

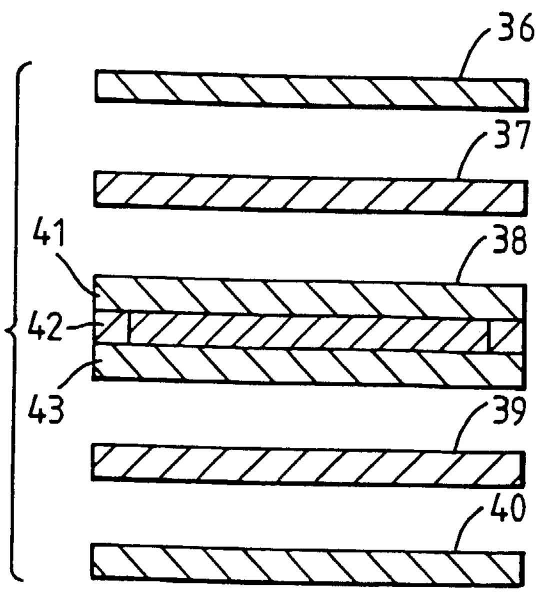
36
37
38
39
40
41
42
43

Fig.11.

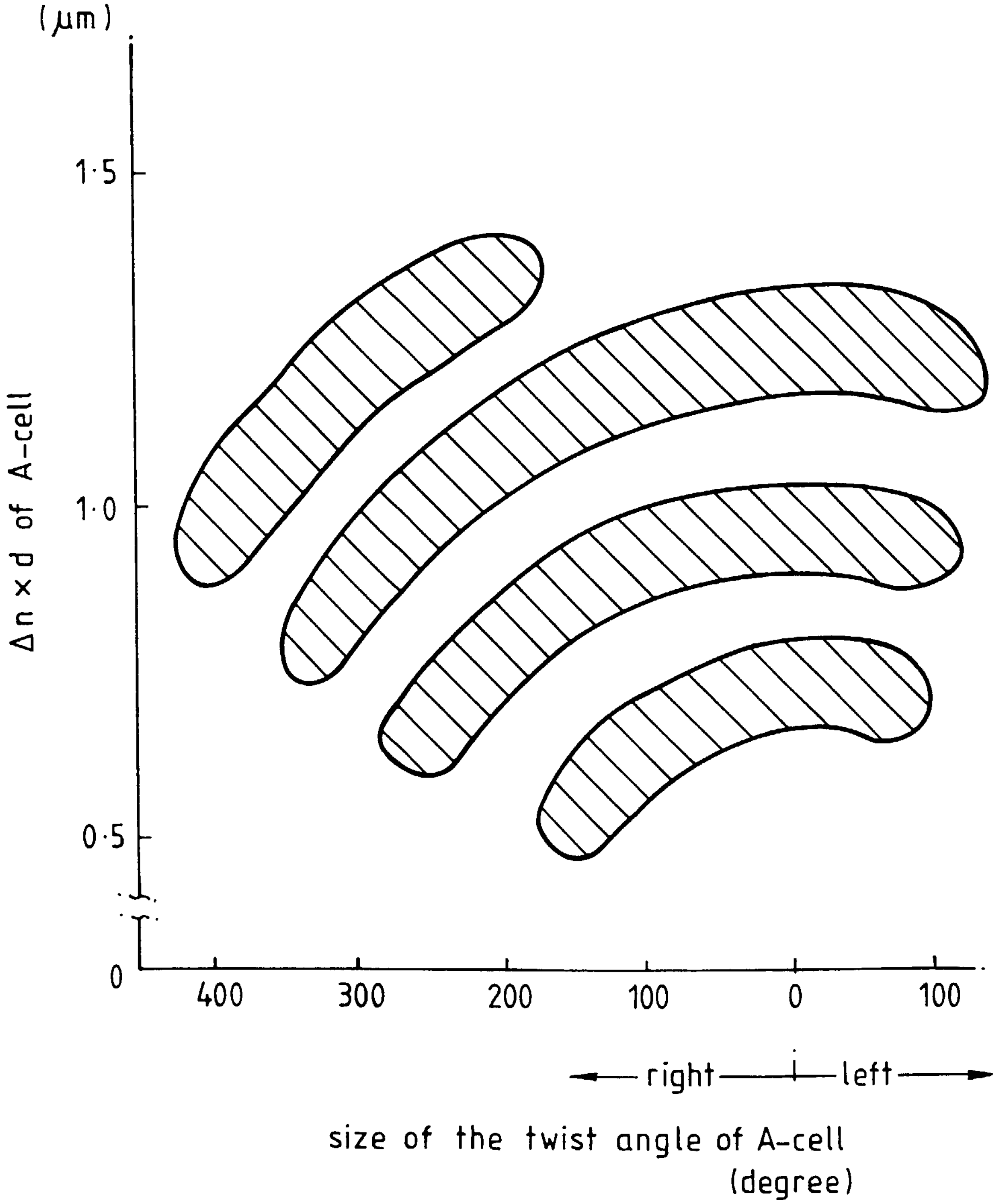
(μm)
1·5
1·0
0·5
0
Δn × d of A-cell
400
300
200
100
0
100
right
left
size of the twist angle of A-cell
(degree)

Fig.12.

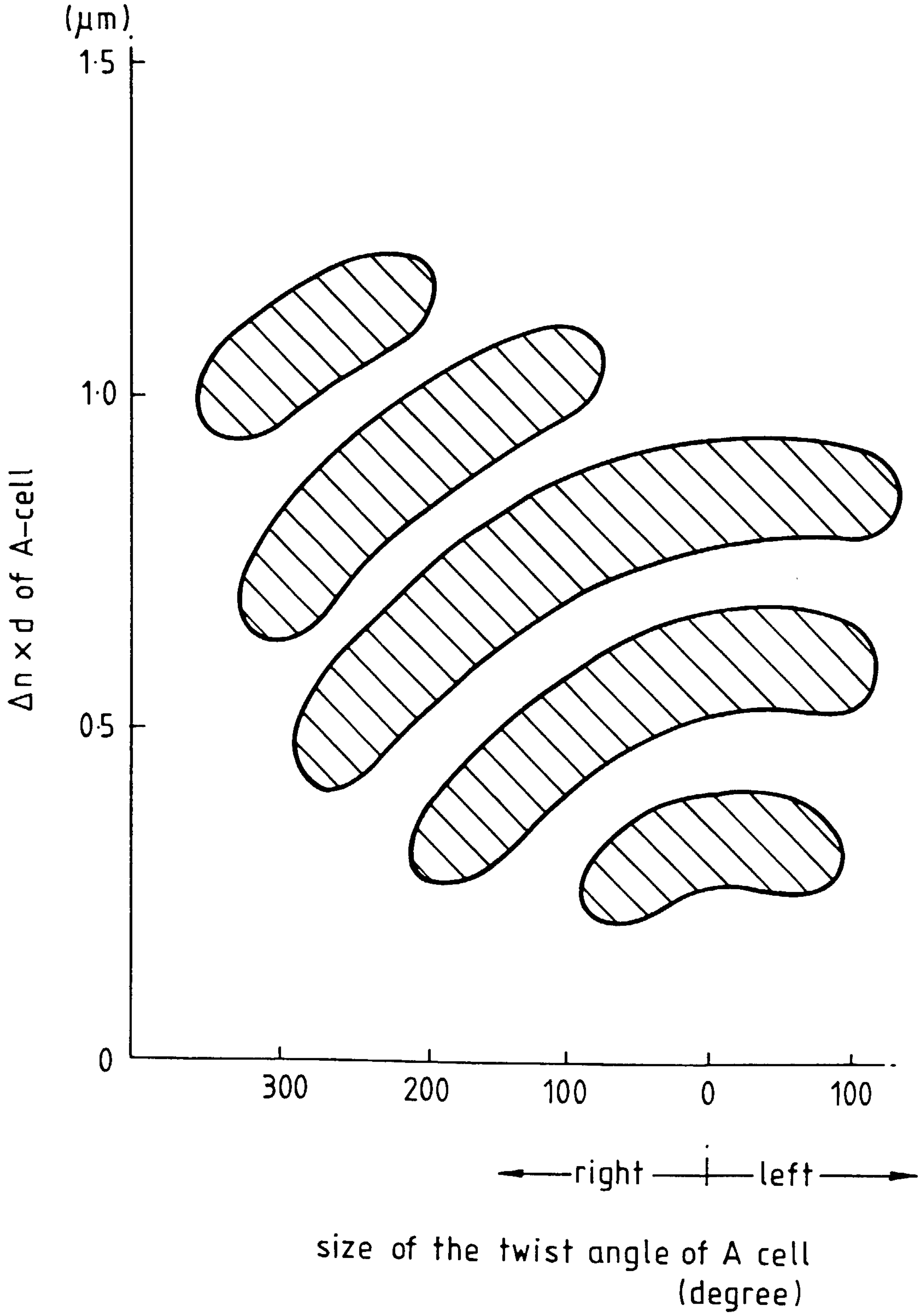
(μm)
1·5
1·0
0·5
0
Δn × d of A–cell
300
200
100
0
100
right
left
size of the twist angle of A cell
(degree)

Fig.13.

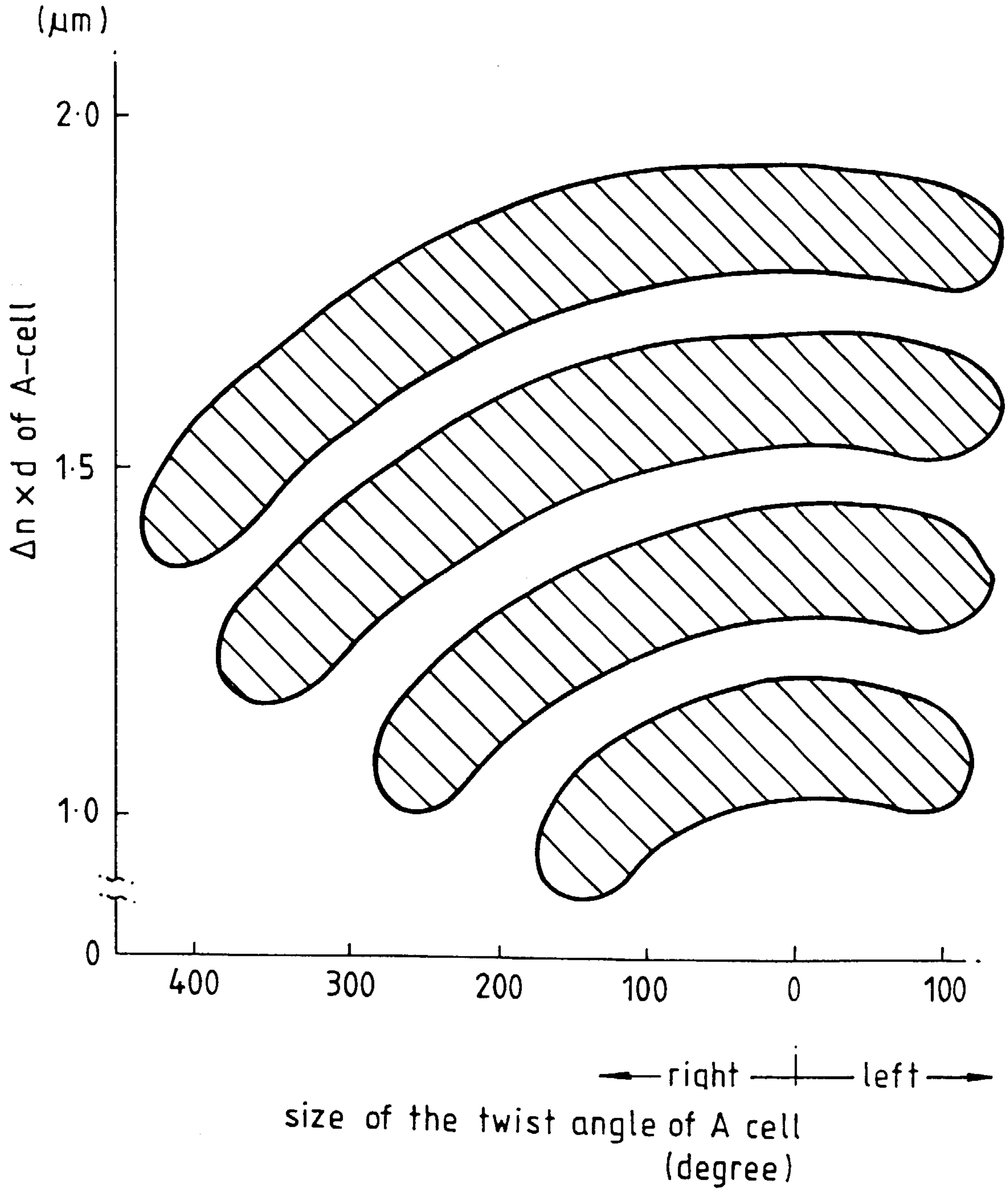
(μm)
2·0
1·5
1·0
0
Δn×d of A-cell
400
300
200
100
0
100
right
left
size of the twist angle of A cell
(degree)

Fig.14.

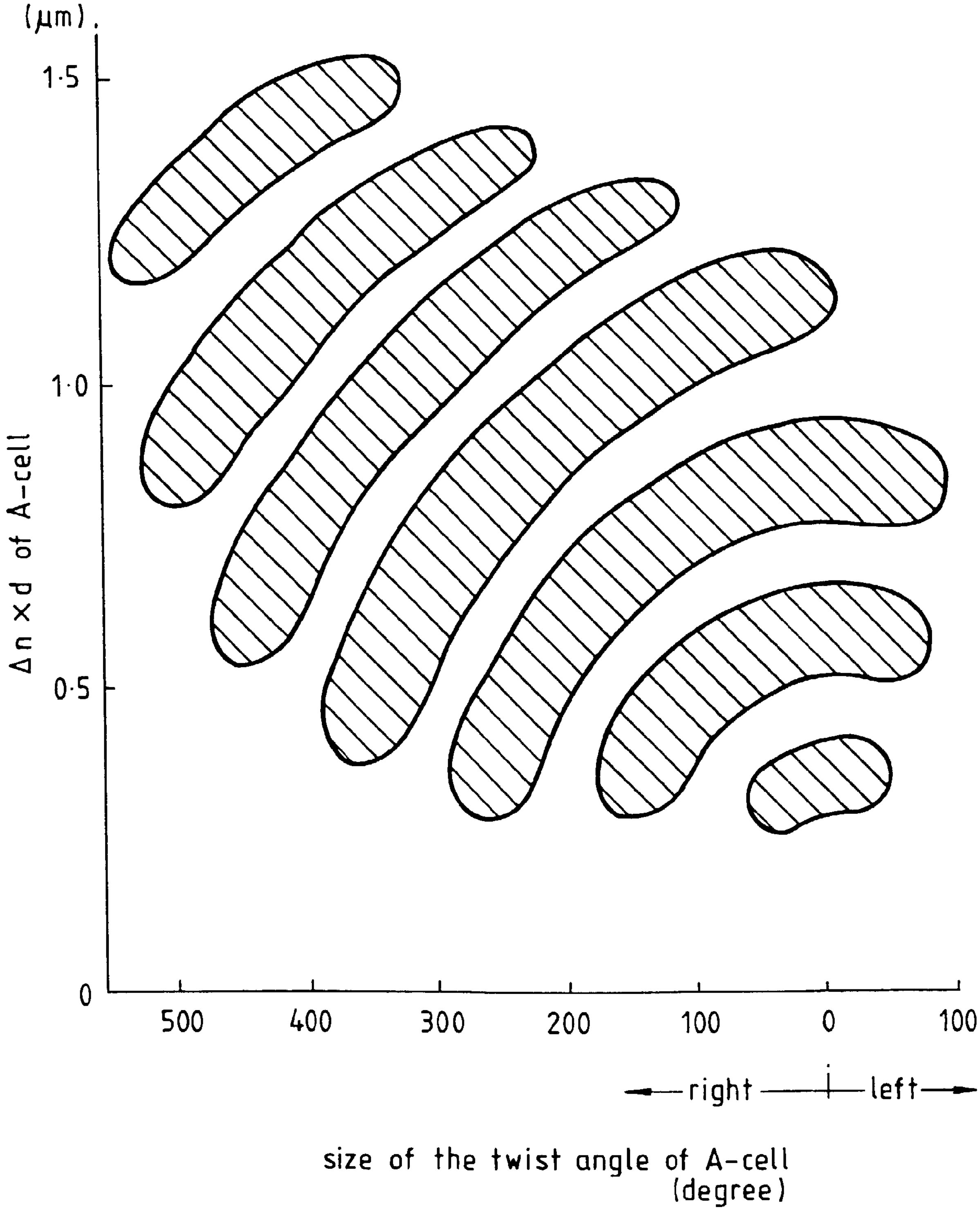
(μm)
1·5
1·0
0·5
0
Δn × d of A-cell
500
400
300
200
100
0
100
right
left
size of the twist angle of A-cell
(degree)

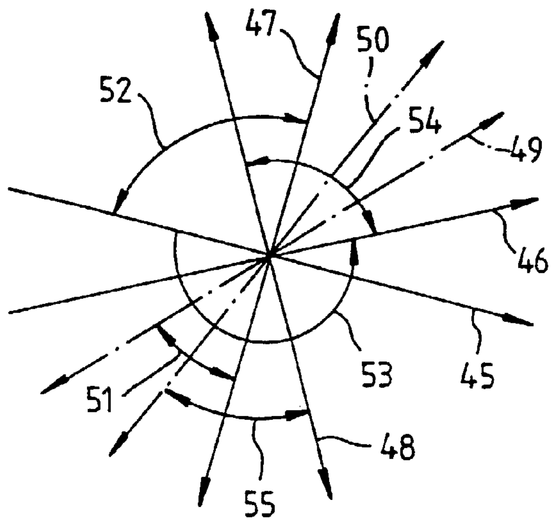


Fig.16.

Fig.17.

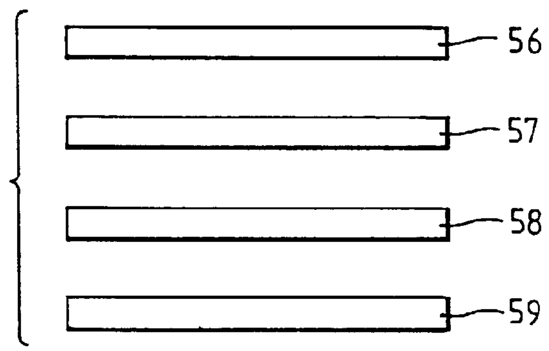


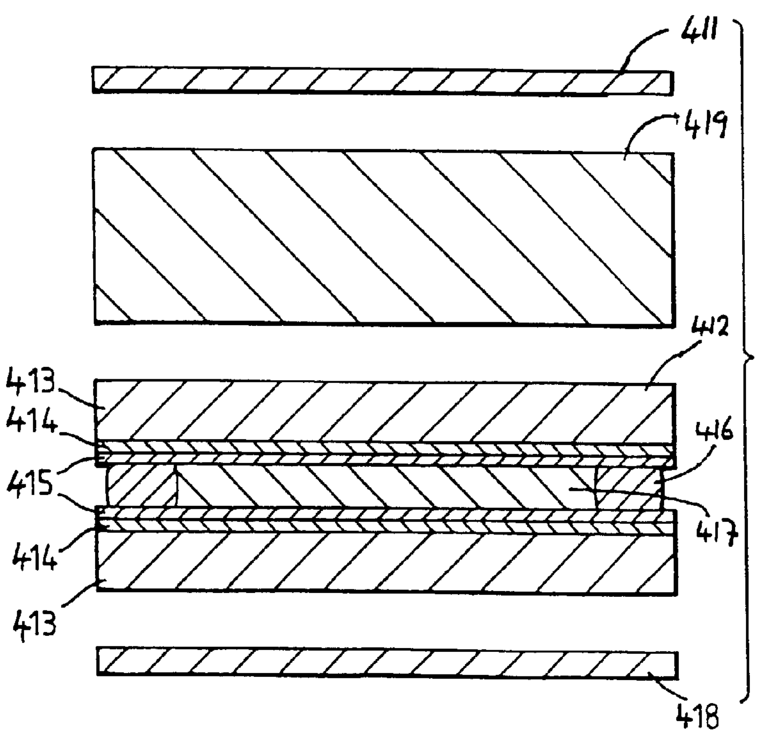


Fig.18.

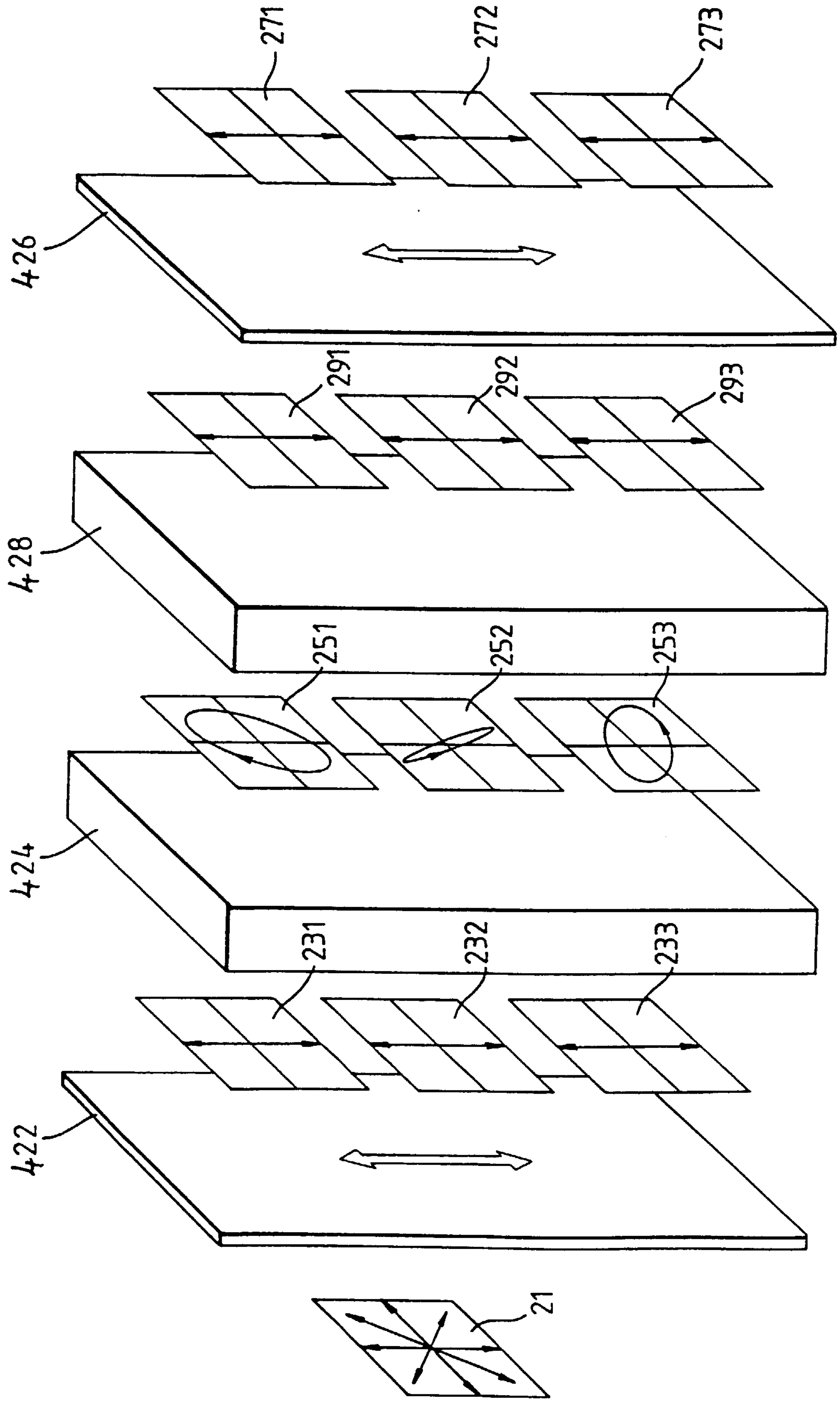
271
272
273
426
291
292
293
428
251
252
253
424
231
232
233
422
21

Fig.19.

Fig.20.

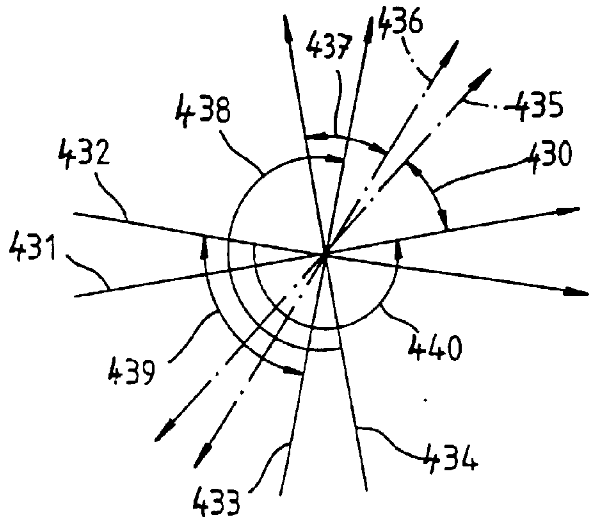


Fig.21.

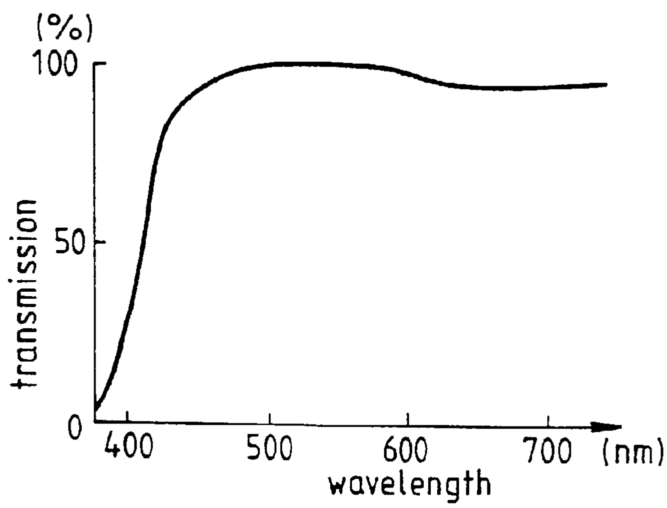


Fig.22.

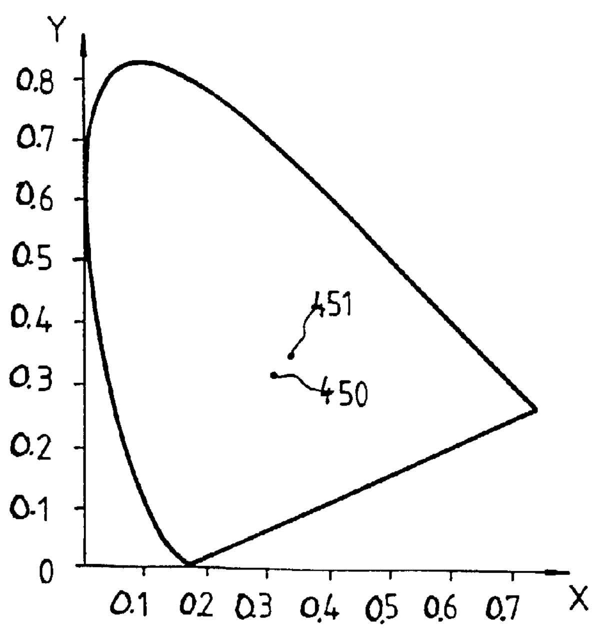

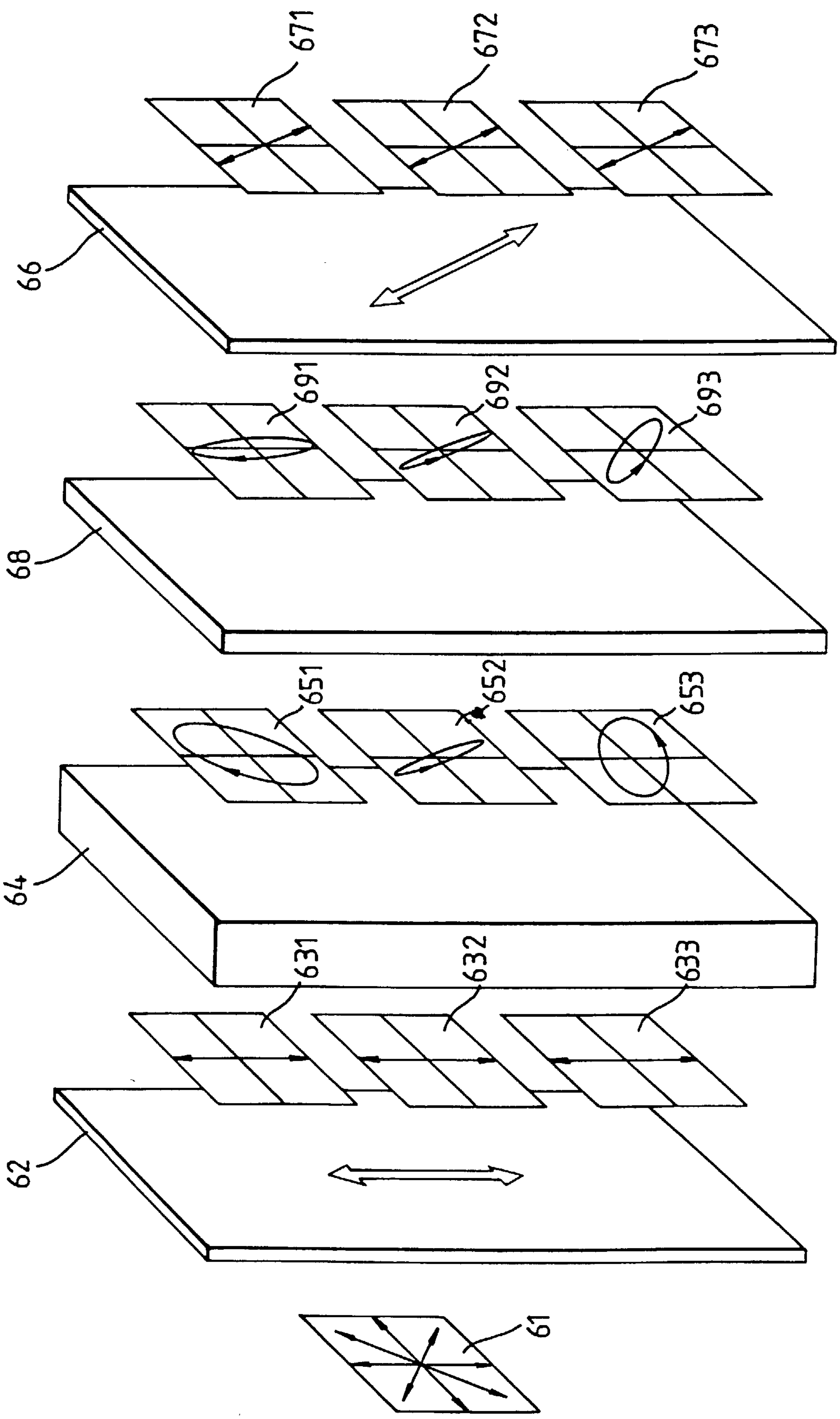


Fig.23.

Fig.24.

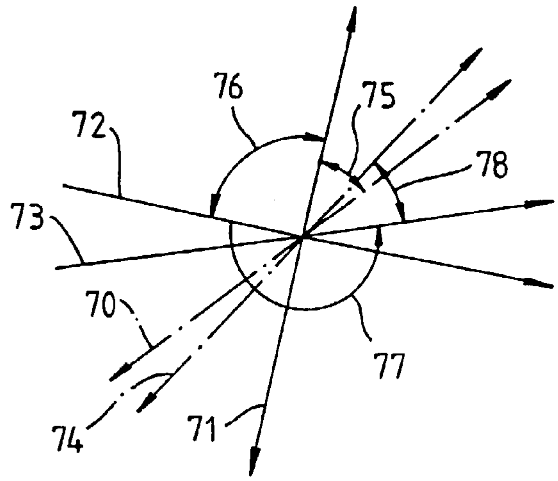


Fig.25.

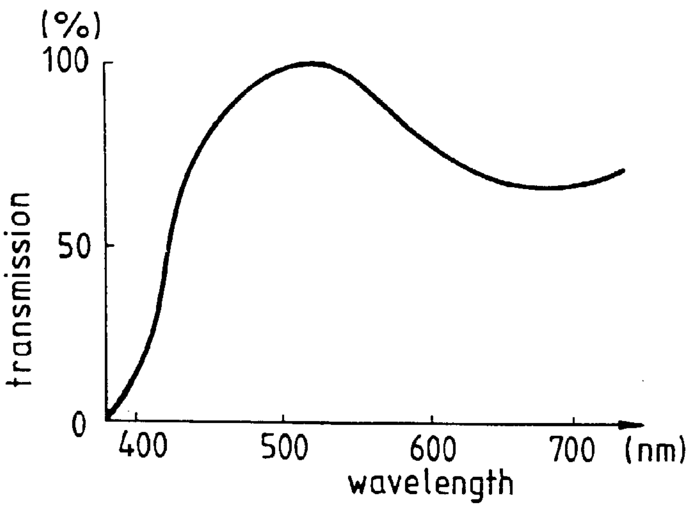


Fig.26.

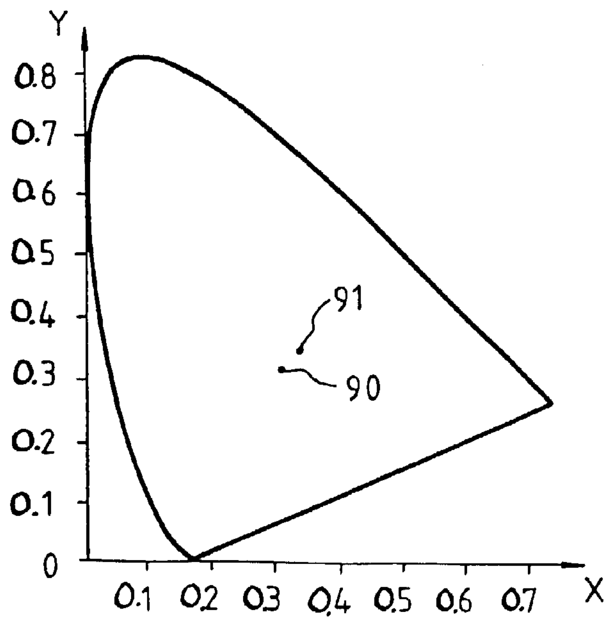

Fig. 33.

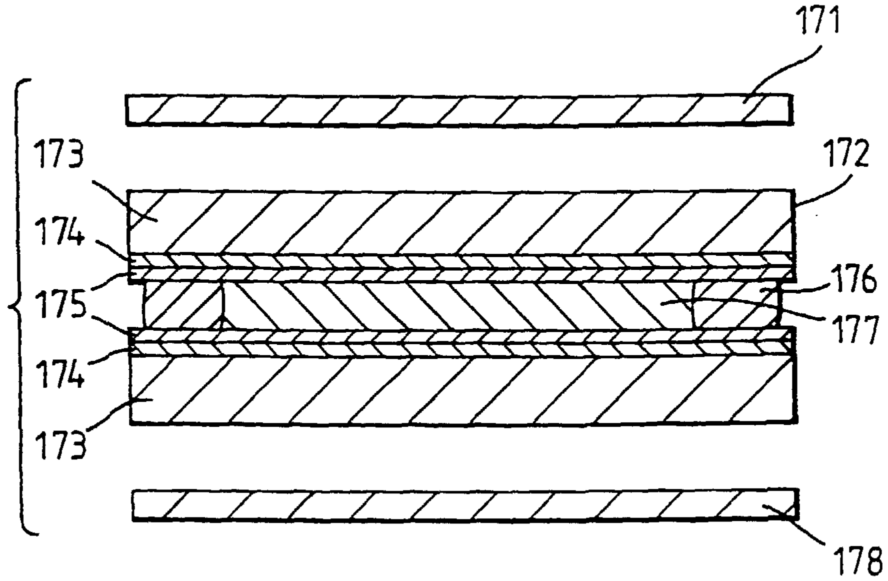

Fig. 28.

(a)

(b)

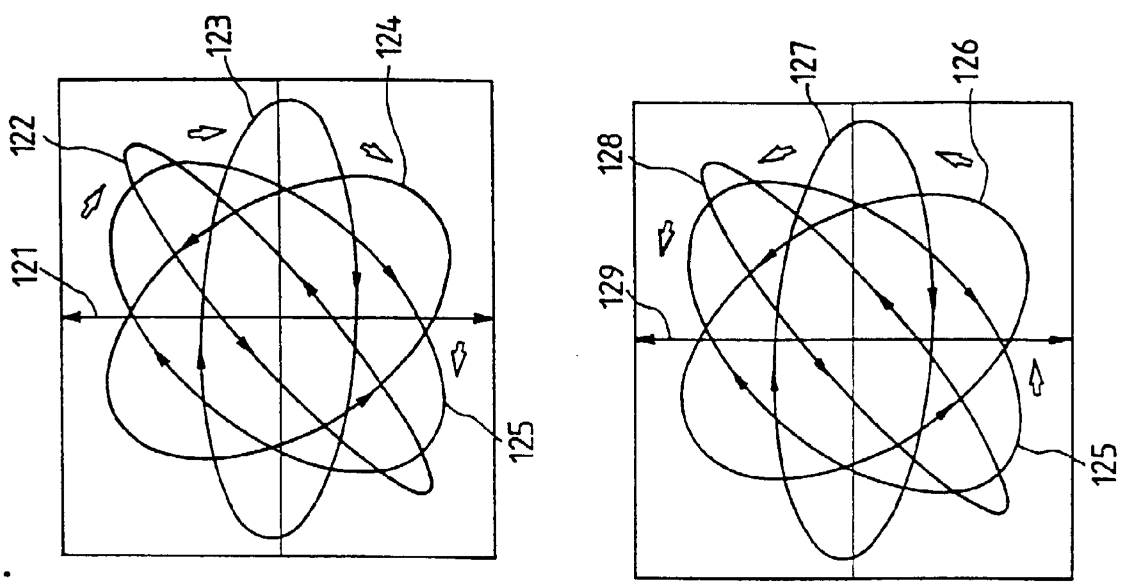


Fig. 27.

(a)

(b)

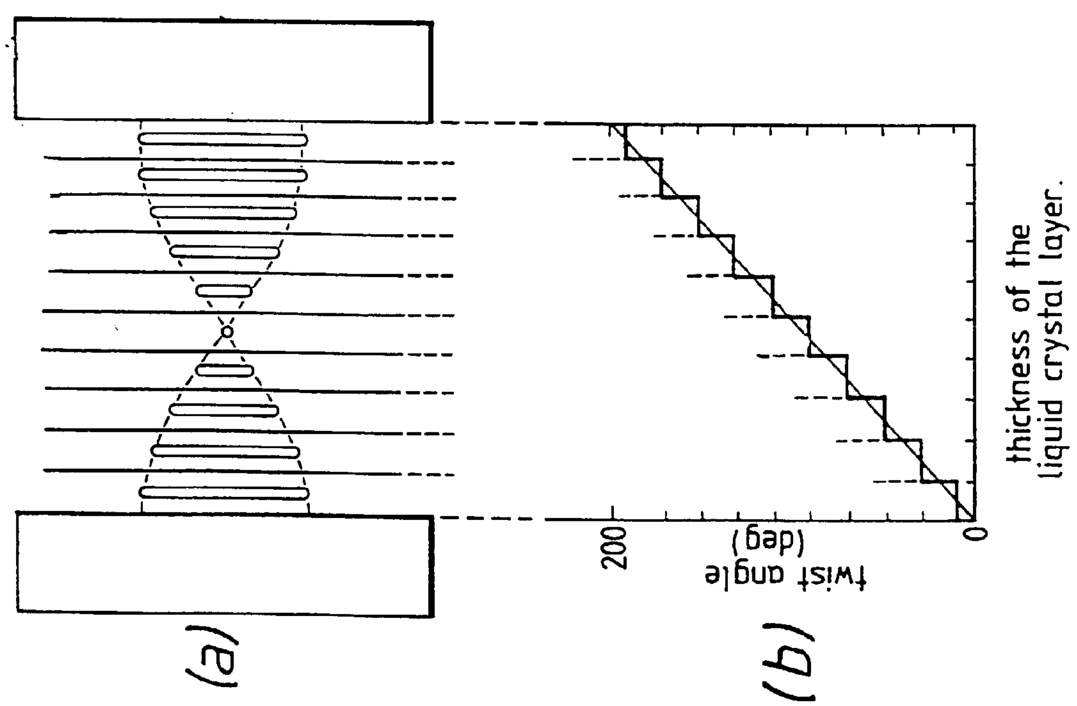

Fig.30.

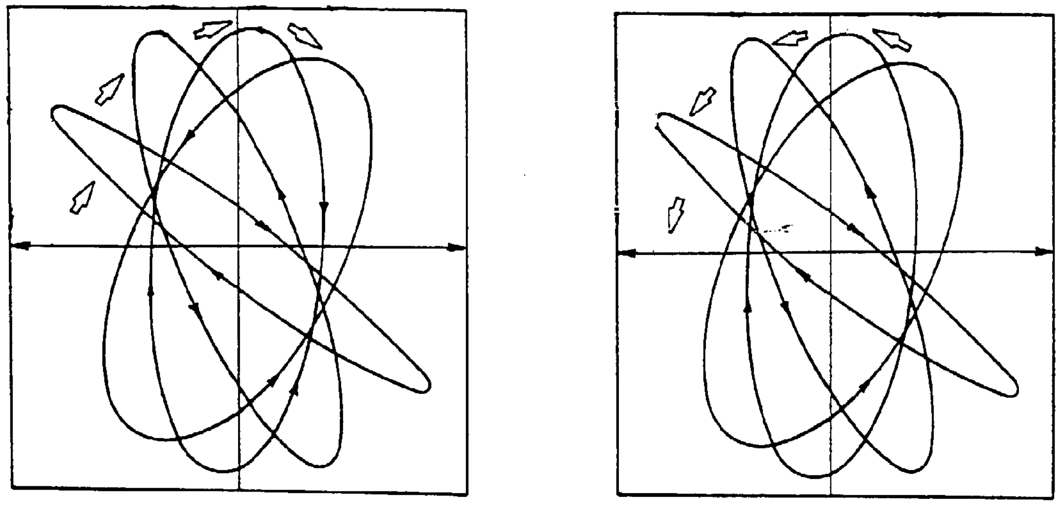

(a) (b)

Fig.29.

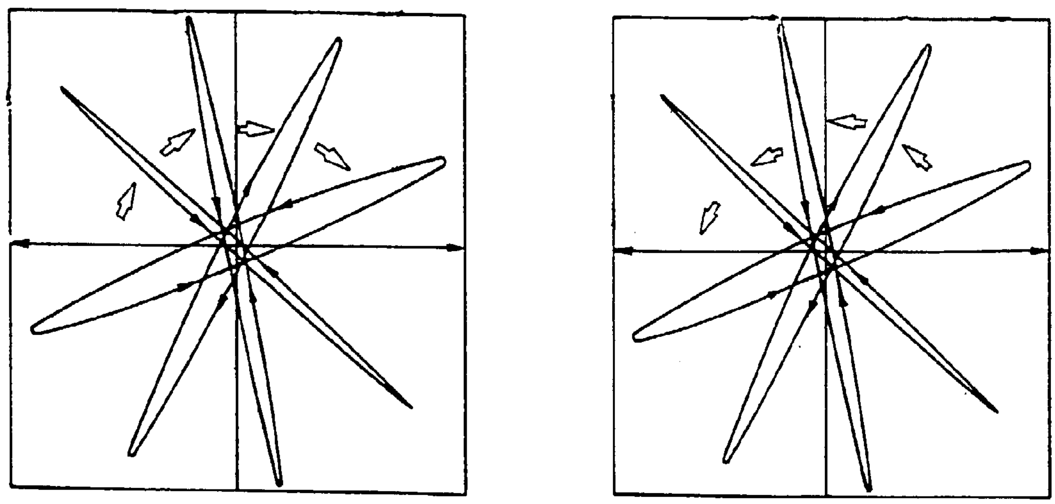

(a) (b)

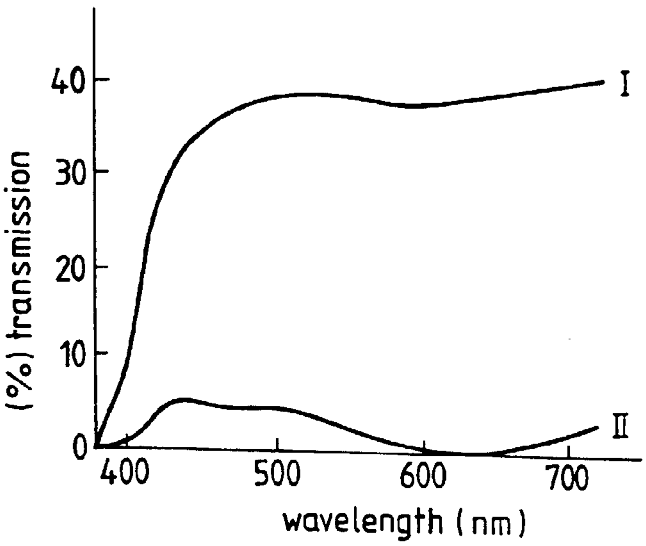


Fig. 31.

Fig. 35.

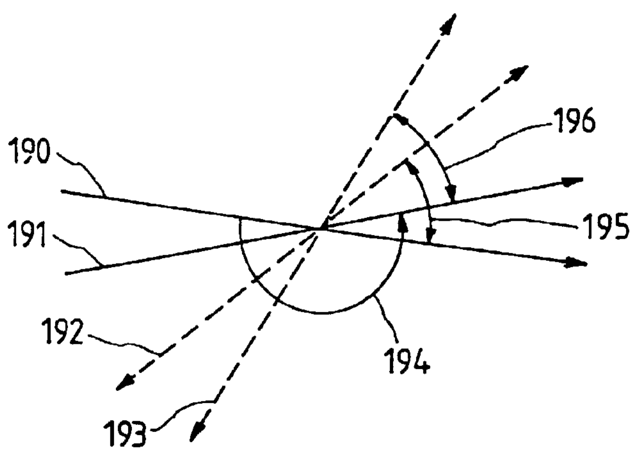


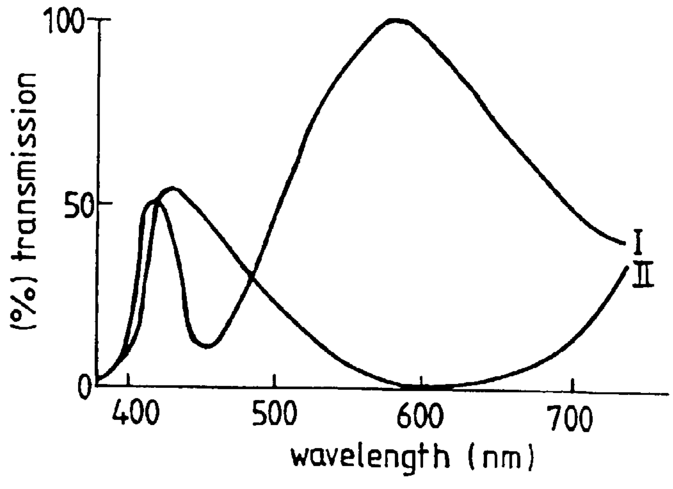


Fig. 36.

Fig.32.

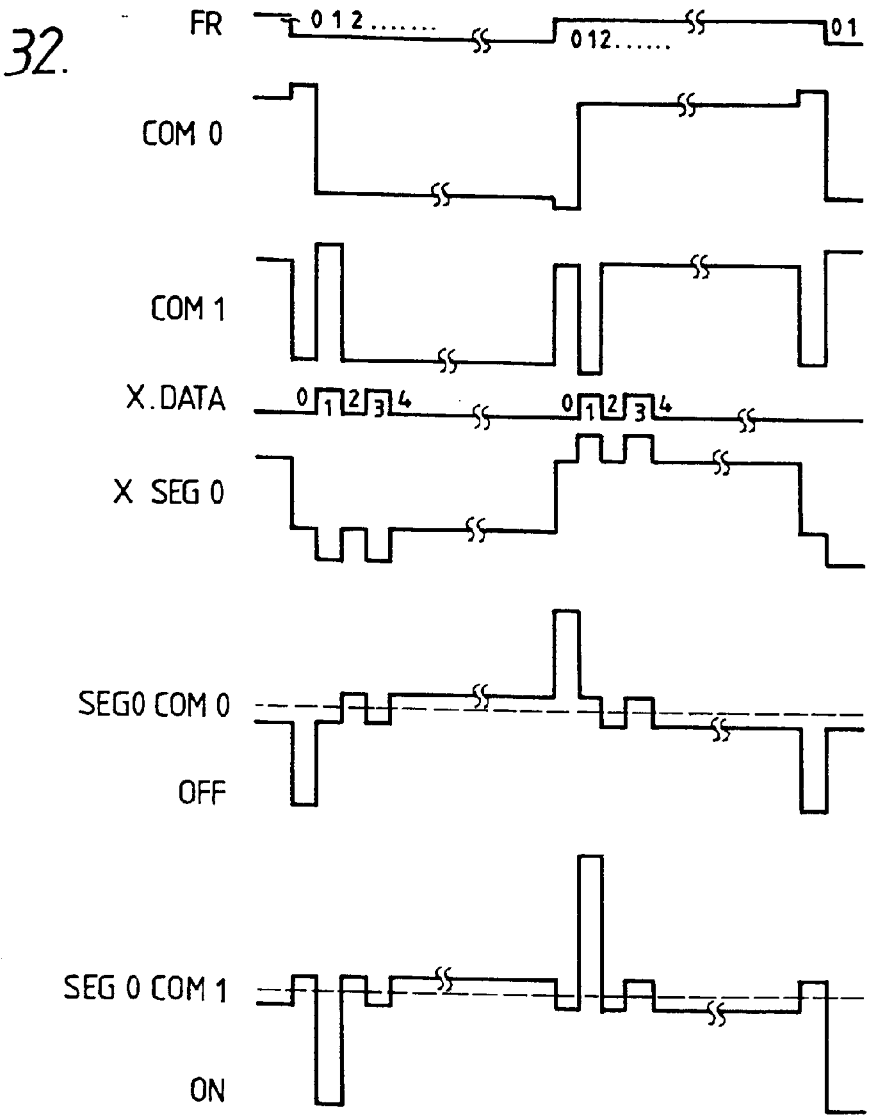
FR
0 1 2 .......
0 1 2 ......
0 1
COM 0
COM 1
X.DATA
0 1 2 3 4
0 1 2 3 4
X SEG 0
SEG0 COM 0
OFF
SEG 0 COM 1
ON

Fig.37.

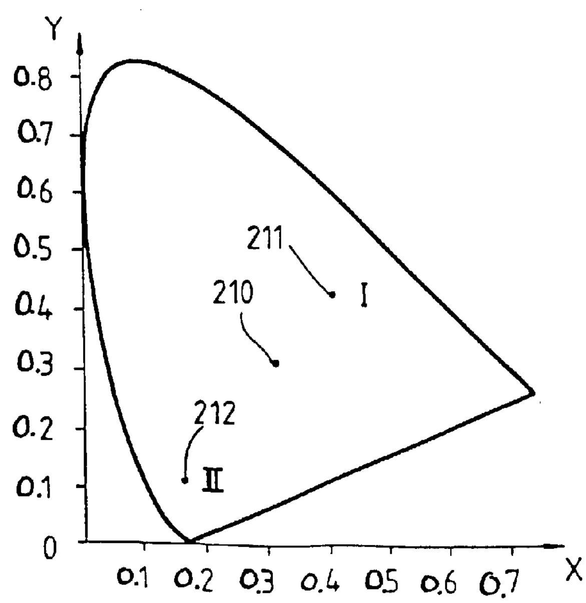
Y
0.8
0.7
0.6
0.5
0.4
0.3
0.2
0.1
0
211
210
212
I
II
0.1
0.2
0.3
0.4
0.5
0.6
0.7
X

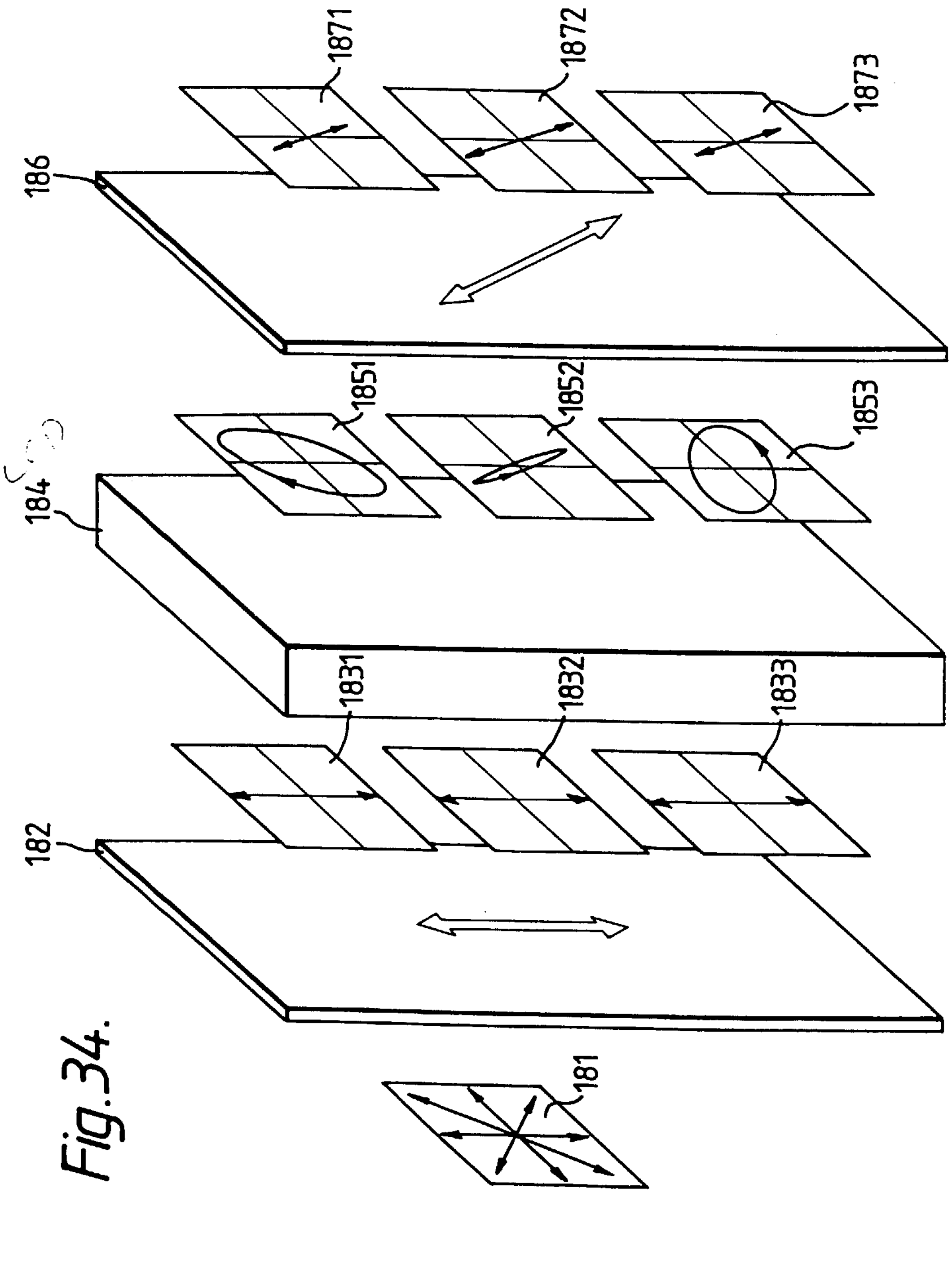


Fig.34.